# EUROPÄISCHE PATENTANMELDUNG

(11) **EP 3 919 451 A1**
(43) Veröffentlichungstag der Anmeldung: **08.12.2021**
(21) Anmeldenummer: 21176208.3
(22) Anmeldetag: 27.05.2021
(51) Int. Cl.: C03B 23/055, C03B 23/09, C03B 23/045

(54) **VORRICHTUNG ZUM UMFORMEN EINES GLASZEUGES**

(30) Priorität: 04.06.2020 DE 102020114880
(71) Anmelder: Gerresheimer Regensburg GmbH, 93047 Regensburg (DE); Gerresheimer Bünde GmbH, 32257 Bünde (DE)
(72) Erfinder: Acker, Wolfram, 32257 Bünde (DE); Kiener, Richard Martin, 92526 Oberviechtach (DE); Löpp, Vladislav, 32257 Bünde (DE)
(74) Vertreter: Schmid, Nils T.F.

(57) **Zusammenfassung**

Die Erfindung betrifft eine Vorrichtung zum Umformen eines drehenden Glasintermediates, insbesondere Glasrohrs, mit wenigstens einer Formrolle, die zum Formgeben in einen Formabrollkontakt mit dem Glasintermediat translatorisch verstellbar ist, und mit wenigstens einem Linearmotor zum translatorischen Stellen der wenigstens einen Formrolle derart, dass die Formrolle einer translatorischen Stellbewegung des Translators des Linearmotors direkt folgt.

## Beschreibung

Die vorliegende Erfindung betrifft eine Vorrichtung zum Umformen eines drehenden Glasintermediates, insbesondere Glasrohrs. Ferner betrifft die Erfindung eine Anlage zum Herstellen eines Glaszeuges, wie einer Glasspritze, einer Glaskarpule, eines Glasvials oder einer Glasampulle, mit einer Aufnahme zum drehbaren Halten eines Glasintermediates, insbesondere Glasrohrs, und einer Vorrichtung zum Umformen des Glasintermediates. Ferner betrifft die Erfindung ein Glaszeug, das mit einer derartigen Anlage oder Vorrichtung hergestellt ist.

Glaszeuge, wie Glasspritzen, Glaskarpulen, Glasvials oder Glasampullen, unterliegen sehr geringen Fertigungstoleranzen, damit zum einen eine hohe Produktqualität sichergestellt werden kann und zum anderen die teilweise genormten Schnittstellen beispielsweise im trichterförmigen Endabschnitt eingehalten werden können. Insbesondere kann für eine zuverlässige Befestigung eines Kunststoffbauteils an einem Glaszeug eine Formgenauigkeit der Endkontur von 0,03 mm erforderlich sein. Insbesondere für die Realisierung einer automatischen Montage von Kunststoffbauteilen an Glaszeugen kann eine Formgenauigkeit der Endkontur von 0,03 mm erforderlich sein.

Darüber hinaus besteht ein Bedürfnis, die erforderliche Herstellungsdauer (Taktzeit) von Glaszeugen zu reduzieren.

Für die Herstellung von Glaszeugen ist es bekannt, Glasintermediate auf Temperaturen oberhalb der Transformationstemperatur zu erwärmen und durch Andrücken einer Formrolle an die Glasintermediatoberfläche zu dem Glaszeug umzuformen.

EP 0 475 047 A2 schlägt vor, über einen Drehmotor eine Gewindestange anzutreiben. Über die Drehung der Gewindestange wird ein Schlitten translatorisch verfahren, an dem eine Formrolle über einen Pneumatikzylinder befestigt ist, um die Fomrolle über den Drehmotor relativ zum Glasintermediat zu verfahren.

Es hat sich jedoch herausgestellt, dass die Taktzeiten mit derartigen Lösungen nicht ausreichend reduziert werden können, um Produktionskosten und -Zeiten wunschgemäß zu reduzieren. Ferner besteht ein Bedürfnis, den Aufbau des Antriebs für die Formrolle zu vereinfachen.

Es ist Aufgabe der vorliegenden Erfindung, die Nachteile aus dem bekannten Stand der Technik zu überwinden, insbesondere eine Vorrichtung bereitzustellen mit der kürzere Taktzeiten erzielt werden können, insbesondere wobei die Komplexität der Vorrichtung reduziert werden soll und/oder die mit der Vorrichtung erzielte Formgenauigkeit der Glaszeuge nicht negativ beeinträchtig, vorzugsweise gesteigert insbesondere bis zu einer Formgenauigkeit von 0,1 mm oder 0,03 mm, werden soll.

Diese Aufgabe wird durch die Merkmale des unabhängigen Anspruchs gelöst.

Die Erfindung betrifft eine Vorrichtung zum Umformen eines drehenden Glasintermediates, insbesondere Glasrohrs. Unter einem drehenden Glasintermediat ist insbesondere ein sich um die Längsachse des Glasintermediates drehendes Glasintermediat zu verstehen. Unter der Längsachse des Glasintermediates ist insbesondere die Rotationsachse, insbesondere Rotationssymmetrieachse, des Glasintermediates zu verstehen. Bei einem Glasrohr ist die Längsachse des Glasintermediates insbesondere die Mittelachse, insbesondere Rotationssymmetrieachse, des Glasrohrs.

Das Glasintermediat kann insbesondere durch eine Aufnahme um eine Aufnahme-Drehachse gedreht werden, die das Glasintermediat drehbar hält. Es sei klar, dass die Aufnahme kein wesentlicher Bestandteil der vorliegenden Erfindung ist. Wesentliche Bestandteile der vorliegenden Erfindung sind die nachfolgend beschriebene wenigstens eine Formrolle und der nachfolgend beschriebene wenigstens eine Linearmotor. Die Vorrichtung kann eine Formgebungsvorrichtung sein. Insbesondere kann die Vorrichtung zum Einsatz in der weiter unten beschriebenen Anlage zum Herstellen eines insbesondere rotationssymmetrischen Glaszeuges, wie einer Glasspritze, einer Glaskarpule, eines Glasvials oder einer Glasampulle, geeignet sein. Die Vorrichtung wird nachfolgend auch als Formgebungsvorrichtung bezeichnet und umfasst die nachfolgend beschriebene wenigstens eine Formrolle sowie den nachfolgend beschriebenen wenigstens einen Linearmotor. Die Formgebungsvorrichtung umfasst nicht notwendigerweise die zuvor und nachfolgend beschriebene Aufnahme zum drehbaren Halten des Glasintermediates. Die Aufnahme zum drehbaren Halten des Glasintermediates kann insbesondere in einer separaten Vorrichtung ausgebildet sein. Insbesondere kann die Aufnahme in einem Karussell ausgebildet sein, das die Aufnahme einem Arbeitsbereich der Formgebungsvorrichtung zuführen und wieder abführen kann. Nachfolgend wird jedoch die Erfindung zum Teil beispielhaft anhand einer der Anlage beschrieben, die sowohl die Formgebungsvorrichtung mit dem wenigstens eine Formrolle und dem wenigstens einen Linearmotor aufweist als auch die zuvor und nachfolgend beschriebene Aufnahme.

Erfindungsgemäß umfasst die Vorrichtung wenigstens eine Formrolle, die zum Formgeben in einen Formabrollkontakt mit dem Glasintermediat translatorisch verstellbar ist. Insbesondere umfasst die wenigstens eine Formrolle zwei oder mehr Formrollen, die zum Formgeben in einen Formabrollkontakt mit dem Glasintermediat translatorisch verstellbar ist. Soweit im folgenden Ausführungsformen im Zusammenhang mit einer Formrolle beschrieben werden, können diese auch derart auf die Ausführungsform mit zwei oder mehr Formrollen angewendet werden, dass jede der Formrollen die beschriebenen Merkmale aufweist.

Um einen Formabrollkontakt mit dem Glasintermediat bereitstellen zu können, ist die Formrolle insbesondere um eine Rollen-Drehachse drehbar. Sofern eine Ausführungsform mit zwei oder mehr Formrollen betroffen ist, kann jede Formrolle um eine eigene Rollen-Drehachse drehbar gelagert sein. Sofern nachfolgend Merkmale in Relation zur Rollen-Drehachse beschrieben werden, müssen diese lediglich in Relation zu einer der Rollen-Drehachsen ausgeführt sein. Vorzugsweise sind derartige Merkmale jedoch in Relation zu jeder Rollen-Drehachse ausgeführt. Insbesondere können sich die Rollen-Drehachsen jeder Formrolle parallel zueinander erstrecken. Insbesondere erstreckt sich die Rollen-Drehachse im Wesentlichen in einer Horizontalebene. Im Wesentlichen bedeutet in diesem Zusammenhang insbesondere, dass die Rollen-Drehachse um maximal 1°, 5°, 10° oder 20° gegenüber der Horizontalebene geneigt ist.

Im Zusammenhang mit der vorliegenden Erfindung ist unter Axialrichtung insbesondere die Richtung zu verstehen, die sich längs, insbesondere parallel, zur Rollen-Drehachse insbesondere im Formabrollkontakt erstreckt. Alternativ oder zusätzlich kann unter Axialrichtung die Richtung verstanden werden, die sich längs, insbesondere parallel, zur Aufnahme-Drehachse insbesondere im Formabrollkontakt erstreckt. Unter der Erstreckung der Axialrichtung längs zur Rollen-Drehachse oder zur Aufnahme-Drehachse ist insbesondere zu verstehen, dass eine die Axialrichtung definierte Achse um maximal 1°, 5°, 10° oder 20° zur Rollen-Drehachse oder zur Aufnahme-Drehachse geneigt ist.

Unter der Radialrichtung sind im Zusammenhang mit der vorliegenden Erfindung insbesondere die sich quer, insbesondere radial oder orthogonal, zur Rollen-Drehachse und/oder der Aufnahme-Drehachse insbesondere im Formabrollkontakt erstreckenden Richtungen zu verstehen. Unter der Erstreckung der Radialrichtung quer zur Rollen-Drehachse oder zur Aufnahme-Drehachse ist insbesondere zu verstehen, dass die Radialrichtung definierende Achsen um maximal 1°, 5°, 10° oder 20° zu einer sich orthogonal zur Rollen-Drehachse erstreckenden Ebene geneigt sind.

Im Zusammenhang mit der vorliegenden Erfindung ist unter Umfangsrichtung insbesondere die Umfangsrichtung in Bezug auf die Rollen-Drehachse oder die Aufnahme-Drehachse zu verstehen.

Für die drehbare Ausgestaltung der Formrolle kann diese über ein Radiallager drehbar um die Rollen-Drehachse gelagert sein. Das Radiallager kann die Formrolle in Radialrichtung zur Rollen-Drehachse lagern. Zusätzlich kann das Radiallager die Formrolle in Axialrichtung zur Rollen-Drehachse lagern, sodass die Formrolle gegenüber dem Radiallager nur einen Bewegungsfreiheitsgrad, nämlich in Umfangsrichtung um die Rollen-Drehachse, aufweist.

Die Formrolle kann frei drehbar gelagert sein. Insbesondere kann die Formrolle als Leerlaufformrolle ausgebildet sein. Alternativ kann die Vorrichtung wenigstens einen Rollen-Motor zum Antreiben der wenigstens einen Formrolle aufweisen. Bei einer Ausführungsform mit einem Rollen-Motor kann die Radiallagerung der Formrolle durch eine insbesondere motoreigene Radiallagerung ausgebildet sein.

Unter Formgeben ist insbesondere die Umformung eines Glasintermediates zu einem Glaszeug zu verstehen. Die Umformung kann aus mehreren Formgebungsschritten oder aus einem einzigen Formgebungsschritt bestehen. In der nachfolgend beschriebenen bevorzugten Ausführungsform der Anlage erfolgt die Formgebung in vier Formgebungsschritten mit jeweils separaten Formgebungsvorrichtungen. Zur Formgebung wird die Formrolle in den Formabrollkontakt mit dem Glasintermediat gebracht. Unter dem Formabrollkontakt ist die Kontaktfläche zwischen der Formrolle und dem Glasintermediat zu verstehen. Insbesondere übt die Formrolle im Formabrollkontakt eine Umformkraft auf das Glasintermediat aus. Die Umformkraft kann insbesondere in Radialrichtung wirken, um das Glasintermediat in Radialrichtung zu verformen. Alternativ oder zusätzlich kann die Umformkraft zur Glasmassenkompensation in Axialrichtung auf das Glasintermediat wirken. Im Formabrollkontakt rollt die Formrolle insbesondere über der Glasoberfläche des Glasintermediates ab. Im Formabrollkontakt dreht sich insbesondere die Formrolle um die Rollen-Drehachse. Insbesondere dreht sich das Glasintermediat im Formabrollkontakt um eine Längsachse, insbesondere Rotationsachse, des Glasintermediates und/oder um die Aufnahme-Drehachse. Insbesondere erstrecken sich die Längsachs des Glasintermediates, insbesondere Aufnahme-Drehachse, und die Rollen-Drehachse im Formabrollkontakt parallel zueinander.

Die Formrolle kann im Wesentlichen zylinderförmig ausgebildet sein. Unter im Wesentlichen zylinderförmig sind insbesondere Formrollen zu verstehen, deren Mantelflächen perfekt zylinderförmig sind oder deren Mantelflächen sich zur Formrollen-Drehachse hin um maximal 1°, 3° oder 5° kegelförmig verjüngen. Alternativ kann die Formrolle eine steile Kegelform aufweisen. Unter einer steilen Kegelform ist insbesondere zu verstehen, dass die Mantelfläche der Formrolle sich kegelförmig um mehr als 5°, 7° oder 10° und weniger als 12°, 15° oder 20° Grad hin zur Rollen-Drehachse verjüngt. Alternativ kann die Formrolle eine flache Kegelform aufweisen. Unter einer flachen Kegelform ist insbesondere zu verstehen, dass die Mantelfläche der Formrolle sich kegelförmig um mehr als 20°, 30° oder 40° Grad hin zur Rollen-Drehachse verjüngt. Insbesondere kann die Formrolle an ihrem dem nachfolgend beschriebenen Linearmotor und/oder Rollen-Motor in Axialrichtung zugewandten Endabschnitt einen scheibenförmig in Radialrichtung über die Mantelfläche der Formrolle hinausragenden insbesondere ringförmigen Absatz aufweisen.

Die Formrolle ist translatorisch in den Formabrollkontakt verstellbar. Darunter ist insbesondere zu verstehen, dass durch translatorisches Verstellen der Formrolle der Formabrollkontakt hergestellt und wieder gelöst werden kann. Insbesondere ist die Formrolle rein translatorisch verstellbar.

Insbesondere ist die Formrolle entlang einer Zustellachse verstellbar. Insbesondere kann die Formrolle entlang einer Radial-Zustellachse verstellbar sein. Eine Radial-Zustellachse ist insbesondere eine sich in Radialrichtung erstreckende Zustellachse, insbesondere ein Zustellachse, die sich quer, insbesondere orthogonal und/oder radial, zur Rollen-Drehachse erstreckt. Alternativ oder zusätzlich kann die Formrolle entlang einer Axial-Zustellachse verstellbar sein. Eine Axial-Zustellachse ist insbesondere eine sich in Axialrichtung erstreckende Zustellachse, insbesondere ein Zustellachse, die sich längs, insbesondere parallel, zur Rollen-Drehachse erstreckt. Die translatorische Verstellbarkeit entlang einer Radial-Zustellachse dient insbesondere der Formgebung des Glasintermediates in Radialrichtung. Die translatorische Verstellbarkeit der Formrollen in Axialrichtung dient insbesondere der axialen Zustellung der Formrollen in Abhängigkeit der axialen Position des zu verformenden Bereiches des Glasintermediates. Insbesondere in Abhängigkeit der Dicke des Glasintermediates kann die axiale Position und die Länge in Axialrichtung des zu verformenden Bereiches variieren. Insbesondere kann in einem vorgelagerten Schritt insbesondere bei dem Zuschneiden des Glasintermediates dessen Dicke ermittelt werden und in Abhängigkeit der Dicke die Länge und/oder axiale Position des zu verformenden Bereiches ermittelt werden. Anschließend kann der Vorrichtung die Dicke, die Länge und/oder die axiale Position des zu verformenden Bereiches übermittelt werden, sodass die axiale Position der Formrollen entsprechend eingestellt werden können. Dadurch können insbesondere auch bei variabler Dicke des Glasintermediates Glaszeuge mit hoher Formgenauigkeit hergestellt werden. Diese Berücksichtigung der Variation der Dicke des Glasintermediates kann als Glasmassenkompensation bezeichnet werden.

Bei einer Ausführungsform mit zwei oder mehr Formrollen kann insbesondere jede der Formrollen entlang einer eigenen Radial-Zustellachse translatorisch verstellbar sein. Alternativ oder zusätzlich kann jede der Formrollen entlang einer Axial-Zustellachse translatorisch verstellbar sein. Bei Ausführungsformen, bei denen jede Formrollen jeweils in Axialrichtung und in Radialrichtung translatorisch verstellbar ist, ist vorzugsweise jede der Formrollen in Axialrichtung über eine Axial-Zustellachse translatorisch verstellbar während jede der Formrollen in Radialrichtung über separate Radial-Zustellachse translatorisch verstellbar ist.

In einer bevorzugten Ausführungsform erstreckt sich eine oder mehrere der Radial-Zustellachsen als Verbindungslinie zwischen der Längsachse des Glasintermediates, insbesondere Aufnahme-Drehachse, und der/n Rollen-Drehachse/n.

Erfindungsgemäß umfasst die Vorrichtung wenigstens einen Linearmotor zum translatorischen Stellen der wenigstens einen Formrolle derart, dass die Formrolle einer translatorischen Stellbewegung des Translators des Linearmotors direkt folgt.

Der wenigstens eine Linearmotor kann wenigstens einen Axial-Linearmotor aufweisen. Unter einem Axial-Linearmotor ist ein Linearmotor zu verstehen, dessen Translator in Axialrichtung, insbesondere längs oder parallel zur Rollen-Drehachse, verstellbar ist. Alternativ oder zusätzlich kann der wenigstens eine Linearmotor wenigstens einen Radial-Linearmotor aufweisen. Unter einem Radial-Linearmotor ist ein Linearmotor zu verstehen, dessen Translator in Radialrichtung, insbesondere quer oder orthogonal, zur Rollen-Drehachse, verstellbar ist

Ein Linearmotor im Sinne der vorliegenden Erfindung umfasst insbesondere einen Stator und einen Translator. Der Translator ist der bewegliche Teil des Motors. Der Stator ist der unbewegliche Teil des Motors. Insbesondere durch zwischen dem Translator und dem Stator wirkende Magnetfeldkräfte, insbesondere Lorenz-Kräfte, kann der Translator in eine translatorische Stellbewegung versetzt werden. Insbesondere kann der Translator in eine rein translatorische Stellbewegung versetzt werden. Zur Bereitstellung der Magnetfeldkräfte kann der Linearmotor ein Primärteil und ein Sekundärteil aufweisen. Das Primärteil ist insbesondere ein Elektromagnet. Das Sekundärteil ist insbesondere ein Permanentmagnet. Durch die zwischen dem Primärteil und dem Sekundärteil wirkenden Magnetfeldkräfte kann der Translator in die translatorische Stellbewegung versetzt werden. Der Translator ist entweder als Primärteil, insbesondere Elektromagnet, oder als Sekundärteil, insbesondere als Permanentmagnet, ausgebildet. Bei Ausführungsformen, bei denen der Translator als Primärteil ausgebildet ist, ist der Stator insbesondere als Sekundärteil ausgebildet. Bei Ausführungsformen, bei denen der Translator als Sekundärteil ausgebildet ist, ist der Stator insbesondere als Primärteil ausgebildet.

Darunter, dass die Formrolle oder anderer nachfolgend beschriebener Bauteile, wie ein Rollen-Motor, ein Radiallager, eine Führungsschiene, ein Führungswagen, ein Rollenwagen oder ein Rollenarm, eine Messeinheit oder ein Messstreifen, der translatorischen Stellbewegung des Translators direkt folgt ist insbesondere zu verstehen, dass das entsprechende Bauteil einer translatorischen Stellbewegung des Translators im Wesentlichen im Betrag und in der Richtung folgt. Unter im Wesentlichen ist in diesem Zusammenhang insbesondere zu verstehen, dass das entsprechende Bauteil, abgesehen von thermischer, dynamischer oder elastischer Verformung in Betrag und Richtung exakt die gleiche translatorische Stellbewegung durchführt wie der Translator.

Damit die Formrolle einer translatorischen Stellbewegung des Translators direkt folgt, kann der Translator insbesondere parallel zur Zustellachse der Formrolle translatorisch verstellbar sein. Insbesondere ist die Formrolle derart fest mit dem Translator verbunden, dass die Formrolle der translatorischen Stellbewegung des Translators direkt folgt. Unter einer derart festen Verbindung der Formrolle oder anderer nachfolgend beschriebener Bauteile wie einem Rollen-Motor, einem Radiallager, einer Führungsschiene, einem Führungswagen, einem Rollenwagen oder einem Rollenarm, einer Messeinheit oder einem Messstreifen, ist insbesondere zu verstehen, dass das entsprechende Bauteil übersetzungsfrei, insbesondere getriebefrei, mit dem Translator verbunden ist. Insbesondere sind der Translator und das derart fest mit dem Translator verbundene Bauteil entlang der Zustellachse zueinander unbeweglich miteinander verbunden. Insbesondere besteht bei einer derart festen Verbindung zwischen dem Translator und dem entsprechenden Bauteil kein Bewegungsfreiheitsgrad entlang der Zustellachse.

Die zuvor beschriebene derart feste Verbindung zwischen dem Translator und einem Bauteil, dass das Bauteil einer translatorischen Stellbewegung des Translators direkt folgt, wird nachfolgend auch als bewegungsfeste Verbindung bezeichnet. Dabei bezieht sich die bewegungsfeste Verbindung stets auf eine Verbindung, die dafür sorgt, dass das entsprechende Bauteil der translatorischen Bewegung des Translators direkt folgt. Demnach erfordert eine bewegungsfeste Verbindung einer Formrolle mit einem Translator, der in Axialrichtung translatorisch verstellbar ist, dass die Formrolle der translatorischen Stellbewegung des Translators entlang dieser Axialrichtung direkt folgt. Eine derartige bewegungsfeste Verbindung schließt jedoch nicht aus, dass die Formrolle in Radialrichtung relativ zum Translator verstellbar ist.

Wie anhand der nachfolgend beschriebenen bevorzugten Ausführungsform der Erfindung ersichtlich ist, kann die Vorrichtung mehrere Linearmotoren aufweisen, über welche die Formrollen einerseits in Radialrichtung und andererseits in Axialrichtung verstellbar sind.

Insbesondere kann die Vorrichtung bei Ausführungsformen mit zwei oder mehreren Formrollen für jede Formrolle einen eigenen Linearmotor aufweisen, dessen Translator insbesondere in Radialrichtung translatorisch verstellbar ist. Insbesondere ist jede der Formrollen derart fest mit dem Translator des eigenen Linearmotors verbunden, dass die Formrolle einer translatorischen Stellbewegung des Translators in Radialrichtung direkt folgt. Alternativ oder zusätzlich kann die Vorrichtung einen Linearmotor aufweisen, dessen Translator in Axialrichtung derart fest mit jeder der Formrollen verbunden ist, dass jede der Formrollen einer translatorischen Stellbewegung des Translators in Axialrichtung direkt folgt.

Die Vorrichtung kann zusätzlich einen parallel zur Rollen-Drehachse verstellbaren Umformdorn aufweisen. Der Umformdorn kann insbesondere koaxial zur Längsachse des Glasintermediates, insbesondere Aufnahme-Drehachse, ausgerichtet sein. Insbesondere ist der Umformdorn translatorisch in das Innere eines insbesondere von der Aufnahme gehaltenen Glasintermediates verstellbar, um das Glasintermediat im Formabrollkontakt innenseitig zu formen, während die wenigstens eine Formrolle das Glasintermediat außenseitig formt.

In einer Ausführungsform umfasst die Vorrichtung wenigstens einen Rollenmotor zum Drehen der wenigstens einen Formrolle im Formabrollkontakt. Insbesondere ist Rollenmotor derart fest mit dem Translator verbunden ist, dass der Rollenmotor der translatorischen Stellbewegung des Translators direkt folgt. Insbesondere ist der Rollen-Motor als Dreh-Elektromotor ausgebildet. Insbesondere weit der Rollen-Motor eine Motorabtriebswelle auf, an der die wenigstens eine Formrolle befestigt ist. Insbesondere ist die Formrolle drehfest mit der Abtriebswelle des Rollen-Motors befestigt. Insbesondere wird die Formrolle direkt durch den Rollen-Motor angetrieben. Insbesondere ist die Formrolle über die Radiallagerung der Motorabtriebswelle radial und axial gelagert. Die Formrolle kann über den Rollen-Motor fest mit dem Translator verbunden sein. Dadurch folgt sowohl der Rollen-Motor als auch die Formrolle einer translatorischen Stellbewegung des Translators direkt.

Der wenigstens eine Linearmotor kann einen Linearmotor mit einem in Axialrichtung zur Rollen-Drehachse verstellbaren Translator sowie einen Linearmotor mit einem in Radialrichtung translatorisch verstellbaren Translator umfassen. Insbesondere ist jeder der zwei Translatoren bewegungsfest mit dem Rollen-Motor verbunden, sodass der Rollen-Motor der Stellbewegung des einen Translators in Radialrichtung und der Stellbewegung des anderen Translators in Axialrichtung direkt folgt.

Alternativ oder zusätzlich kann die wenigstens eine Formrolle zwei oder mehr Formrollen aufweisen, wobei jede der Formrollen über jeweils einen Rollen-Motor drehbar ist. Insbesondere kann jeder der Rollen-Motoren über einen separaten Linearmotor quer zur Rollen-Drehachse verstellbar sein. Insbesondere ist jeder der Rollen-Motoren bewegungsfest mit jeweils einem Translator eines Linearmotors verbunden, sodass jeder Rollen-Motor der translatorischen Stellbewegung eines Translators direkt folgt. Insbesondere sind die Rollen-Motoren über die Linearmotoren in Radialrichtung relativ zueinander verstellbar.

Alternativ oder zusätzlich kann jeder der Rollen-Motoren über einen gemeinsamen Linearmotor in Axialrichtung verstellbar sein. Beispielsweise kann jeder Rollen-Motoren derart fest mit einem einzigen in Axialrichtung verstellbaren Translator eines Linearmotors verbunden sein, dass beide Rollen-Motoren der translatorischen Stellbewegung des einen Translators in Axialrichtung direkt folgen.

In einer Ausführungsform umfasst die Vorrichtung wenigstens ein Radiallager, insbesondere ein Radiallager eines Rollen-Motors. Insbesondere ist das Radiallager derart fest mit dem Translator verbunden, dass das Radiallager der translatorischen Stellbewegung des Translators direkt folgt. In der zuvor beschriebenen Ausführungsform, in der die Formrolle über wenigstens einen Rollen-Motor im Formabrollkontakt drehbar ist, ist kann das wenigstens eine Radiallager durch wenigstens ein Rollen-Motor-eigenes Radiallager ausgebildet sein. Bei Ausführungsformen, bei denen die wenigstens eine Formrolle frei drehbar gelagert ist, kann die wenigstens eine Formrolle rollenmotorfrei an der Vorrichtung befestigt. In derartigen Ausführungsformen wird die wenigstens eine Formrolle über Radiallager, wie beispielsweise einfach, zweifach oder mehrfach Rillenkugellager radial und insbesondere axial gelagert.

Die zuvor und nachfolgend beschriebenen Ausführungsformen, bei denen die wenigstens eine Formrolle mit Rollen-Motoren angetrieben wird, können analog auch als Ausführungsformen ausgebildet werden, bei denen die wenigstens eine Formrolle frei drehbar (ohne Rollen-Motor) gelagert ist, indem der wenigstens eine Rollen-Motor durch wenigstens ein Radiallager ausgetauscht wird. Das wenigstens eine Radiallager lagert die wenigstens eine Formrolle insbesondere in Radialrichtung und vorzugswiese in Axialrichtung.

In einer Ausführungsform umfasst die Vorrichtung wenigstens eine Linearführung zum Führen des Translators und der wenigstens einen Formrolle entlang einer Zustellachse, wobei die Linearführung eine Führungsschiene und eine Führungswagen, die entlang der Zustellachse zueinander beweglich sind, umfasst, wobei der Translator derart fest mit der Führungsschiene oder dem Führungswagen verbunden ist, dass die Führungsschiene oder der Führungswagen einer translatorischen Stellbewegung des Translators direkt folgt.

Insbesondere sind die Führungsschiene und der Führungswagen parallel zur Zustellachse der wenigstens einen Formrolle relativ zueinander translatorisch verstellbar. Insbesondere umgreift der Führungswagen die Führungsschiene. Insbesondere sind der Führungswagen und die Führungsschiene ausschließlich parallel zur Zustellachse zueinander verstellbar. Insbesondere werden sowohl der Translator als auch die Formrolle über die Linearführung parallel zur Zustellachse geführt.

Bei Ausführungsformen mit einem Axial-Linearmotor, kann die wenigstens eine Linearführung wenigstens eine Axialführung aufweisen. Eine Axialführung ist eine Linearführung, bei der der Führungswagen und die Führungsschiene in Axialrichtung, insbesondere längs oder parallel zur Rollen-Drehachse, zueinander verstellbar sind. Bei einer Axialführung ist vorzugsweise der Führungswagen in Axialrichtung bewegungsfest mit dem Translator verbunden.

Bei Ausführungsformen mit einem Radial-Linearmotor, kann die wenigstens eine Linearführung wenigstens eine Radialführung aufweisen. Eine Radialführung ist eine Linearführung, bei der der Führungswagen und die Führungsschiene in Radialrichtung, insbesondere quer oder orthogonal, zur Rollen-Drehachse, zueinander verstellbar sind. Bei einer Radialführung ist vorzugsweise die Führungsschiene fest mit dem Translator verbunden.

Bei Ausführungsformen mit zwei oder mehr Formrollen, die über jeweils einen Radial-Linearmotor verstellbar sind, kann jeder Translator der Radial-Linearmotoren über eine separate Radialführung geführt sein. Bei Ausführungsformen, bei denen die wenigstens eine Formrolle über einen Axial-Linearmotor und einen Radial-Linearmotor verstellbar ist, kann der Translator des Radial-Linearmotors über eine Radialführung und der Translator des Axial-Linearmotors über eine Axialführung geführt sein.

Zusätzlich zur Führungsschiene und zum Führungswagen kann die wenigstens eine Linearführung einen Führungszylinder und einen Führungskolben aufweisen, wobei der Translator derart fest mit dem Führungszylinder oder dem Führungskolben verbunden ist, dass der Führungszylinder oder der Führungskolben der translatorischen Stellbewegung des Translators direkt folgt. Es hat sich gezeigt, dass durch die Ausgestaltung mit dem zusätzlichen Führungszylinder und dem zusätzlichen Führungskolben die Führungsschiene und der Führungswagen entlastet werden können, so dass das nachfolgend beschriebene Messsystem zuverlässiger zur Messung der translatorischen Stellbewegung an der Führungsschiene und dem Führungswagen eingesetzt werden kann. Alternativ zur Entlastung der Führungsschiene und des Führungswagens durch den Einsatz eines Führungszylinders und des Führungskolbens kann die wenigstens eine Linearführung auch mit zwei Führungsschienen und zwei Führungswagen ausgestaltet sein.

In einer Ausführungsform ist der fest mit dem Translator verbundene Teil der wenigstens einen Linearführung, insbesondere der Führungswagen oder die Führungsschiene, derart fest mit einem entlang der Zustellachse verstellbaren Rollenträger, insbesondere einem längs zur Rollendrehachse verstellbaren Rollenwagen und/oder einem quer zur Rollendrehachse verstellbaren Rollenarm, verbunden, dass der Rollenträger der translatorischen Stellbewegung des Translators direkt folgt.

Unter einem Rollenträger ist insbesondere ein die wenigstens eine Formrolle tragende Struktur zu verstehen. Insbesondere ist die wenigstens eine Formrolle derart fest mit dem Rollenträger verbunden, dass die Formrolle einer translatorischen Stellbewegung des Rollenträgers direkt folgt. Je nach Ausführungsform kann der zuvor beschriebenen Rollen-Motor und/oder das zuvor beschriebene Rollenlager derart fest mit dem Rollenträger verbunden sein, dass der Rollenmotor und/oder das Rollenlager einer translatorischen Stellbewegung des Rollenträgers direkt folgt.

Bei Ausführungsformen, bei denen die wenigstens eine Linearführung eine Axialführung aufweist ist vorzugsweise der Führungswagen fest mit dem Rollenträger verbunden. Vorzugsweise weist der Rollenträger bei Ausführungsformen mit Axialführung einen Rollenwagen auf. Der Rollenwagen ist insbesondere entlang einer Axial-Zustellachse translatorisch verstellbar. Vorzugsweise ist der Rollenwagen über zwei Axialführungen mit jeweils einem Führungswagen und einer Führungsschiene entlang der Axial-Zustellachse geführt. Vorzugsweise sind die zwei Führungswagen derart fest mit dem Rollenwagen verbunden, dass der Rollenwagen einer translatorischen Stellbewegung der zwei Führungswagen direkt folgt. Vorzugsweise sind die zwei Führungswagen parallel zueinander entlang der Axial-Zustellachse translatorisch verstellbar. Vorzugsweise sind die zwei Führungsschienen fest, insbesondere unbeweglich, mit einem Fundament der Formgebungsvorrichtung verbunden. Unter dem Fundament ist insbesondere der Teil der Formgebungsvorrichtung zu verstehen, über den die Formgebungsvorrichtung auf dem Boden einer Produktionshalle abstellbar ist. Insbesondere ist das Fundament von der translatorischen Stellbewegung der wenigstens einen Formrolle entkoppelt.

Vorzugsweise weist der wenigstens eine Linearmotor einen Axial-Linearmotor auf, der zwischen den zwei Axialführungen angeordnet ist. Insbesondere ist der Translator des Axial-Linearmotors fest mit dem Rollenwagen verbunden. Insbesondere ist der Stator des Linearmotors fest mit dem Fundament verbunden. Insbesondere erstrecken sich der Stator des Axial-Linearmotors und die zwei Führungsschienen der Axialführungen parallel zueinander. Insbesondere erstrecken sich der Translator des Axial-Linearmotors und die Führungswagen der Axialführungen parallel zueinander. Insbesondere ist der Translator des Axial-Linearmotors zwischen den Führungswagen der Axialführungen angeordnet. Insbesondere ist der Stator des Axial-Linearmotors zwischen den Führungsschienen der Axialführungen angeordnet.

Bei Ausführungsformen, bei denen die wenigstens eine Linearführung eine Radialführung aufweist ist vorzugsweise die Führungsschiene fest mit dem Rollenträger verbunden. Vorzugsweise weist der Rollenträger bei Ausführungsformen mit Radialführung wenigstens einen Rollenarm auf. Der Rollenarm ist insbesondere entlang einer Radial-Zustellachse translatorisch verstellbar. Vorzugsweise erstreckt sich der Rollenarm in Axialrichtung. Vorzugsweise ist der Rollenarm fest mit dem Translator eines Radial-Linearmotors verbunden. Vorzugsweise ist der Rollenarm fest mit einer der wenigstens einen Formrolle verbunden. Besonders bevorzugt ist der Rollenarm fest mit einem Rollenmotor oder einem Radiallager verbunden, der/das die Formrolle drehbar lagert. Vorzugsweise sind die Formrolle und der Translator des Radial-Linearmotors in Axialrichtung zueinander beabstandet mit dem Rollenarm verbunden. Besonders bevorzugt ist der fest mit dem Translator verbundene Teil der Radialführung, insbesondere die Führungsschiene, fest mit dem Rollenarm verbunden. Vorzugsweise ist der fest mit dem Translator verbundene Teil der Radialführung in Axialrichtung zwischen der Formrolle und dem Translator des Radial-Linearmotors mit dem Rollenarm befestigt.

Bei Ausführungsformen, bei denen die wenigstens eine Formrolle zwei in Radialrichtung translatorisch verstellbare Formrollen aufweist, weist die Vorrichtung vorzugsweise zwei Rollenarme und zwei Radial-Linearmotoren auf. Vorzugsweise ist jeder Translator der zwei Radial-Linearmotoren mit jeweils einem Rollenarm derart fest verbunden, dass der Rollenarm der translatorischen Stellbewegung des Translators direkt folgt. Alternativ oder zusätzlich ist jede der zwei Formrollen derart fest mit jeweils einem der zwei Rollenarme verbunden, dass die jeweilige Formrolle der jeweiligen translatorischen Stellbewegung des Rollenarms direkt folgt. Vorzugsweise ist jeder der Rollenarme über eine separate Radialführung entlang einer Radial-Zustellachse geführt. Vorzugsweise ist jeweils die Führungsschiene der Radialführung fest mit dem Rollenarm verbunden. Vorzugsweise sind die Rollenarm relativ zueinander in Radialrichtung translatorisch verstellbar. Besonders bevorzugt sind die Rollenarme entlang einer gemeinsamen Radial-Zustellachse translatorisch verstellbar.

In Ausführungsform, bei denen die wenigstens eine Formrolle sowohl in Radialrichtung als auch in Axialrichtung translatorisch verstellbar ist, weist der Rollenträger vorzugsweise einen Rollenwagen und wenigstens einen Rollenarm, insbesondere zwei der zuvor beschriebenen Rollenarme, auf. Vorzugsweise ist der wenigstens eine Rollenarm in Axialrichtung derart fest mit dem Rollenwagen verbunden, dass der Rollenarm einer translatorischen Stellbewegung des Rollenwagens in Axialrichtung direkt folgt. Vorzugsweise ist der wenigstens eine Rollenarm in Radialrichtung relativ zum Rollenwagen verstellbar. Vorzugsweise ist der wenigstens eine Rollenarm über jeweils eine Radialführung in Radialrichtung relativ zum Rollenwagen verstellbar. Vorzugsweise ist jeweils die Führungsschiene der Radialführung fest mit dem Rollenarm verbunden und jeweils der Führungswagen der Radialführung fest mit dem Rollenwagen verbunden. Alternativ oder zusätzlich ist der Translator des wenigstens einen Radial-Linearmotors fest mit dem jeweiligen Rollenarm verbunden und der Stator des wenigstens einen Radial-Linearmotors fest mit dem Rollenwagen verbunden. Alternativ oder zusätzlich ist der Translator des Axial-Linearmotors fest mit dem Rollenwagen verbunden und/oder der Stator des Axial-Linearmotors fest mit dem Fundament der Formgebungsvorrichtung verbunden.

Besonders bevorzugt ist das Primärteil des wenigstens einen Linearmotors fest mit dem Rollenwagen verbunden. Bei Ausführungsformen mit einem Axial-Linearmotor und wenigstens einem Radial-Linearmotor ist vorzugsweise der Translator des Axial-Linearmotors als Primärteil ausgebildet und der Stator des Radial-Linearmotors als Primärteil ausgebildet. Es hat sich herausgestellt, dass durch die Befestigung der Primärteile an dem Rollenwagen die dynamische Belastung der elektrischen Komponenten der Primärteile reduziert werden kann, die verstärkt bei Stellbewegung in Radialrichtung auftreten. Daher werden die Sekundärteile der Linearmotoren vorzugsweise an den Rollenarmen befestigt.

Bei Ausführungsformen, bei denen die wenigstens eine Linearführung eine Radialführung aufweist ist vorzugsweise die Führungsschiene fest mit dem Rollenträger verbunden.

In einer Ausführungsform umfasst die Vorrichtung wenigstens ein Messsystem mit einer insbesondere optischen Messeinheit und einem Messstreifen zum Messen der translatorischen Stellbewegung des Translators, wobei die Messeinheit oder der Messstreifen derart fest mit dem Translator verbunden ist, dass die Messeinheit oder der Messstreifen der translatorischen Stellbewegung des Translators direkt folgt.

Dadurch kann insbesondere gewährleistet werden, dass die Relativbewegung zwischen Messeinheit und Messstreifen der translatorischen Stellbewegung des Translators entspricht. Dadurch können insbesondere über die gemessene Relativbewegung zwischen Messeinheit und Messstreifen direkt Rückschlüsse auf die translatorische Stellbewegung des Translators geschlossen werden. Dadurch kann eine besonders präzise Zustellung der Formrolle gewährleistet werden.

Vorzugsweise ist der Messstreifen als Metallstreifen ausgebildet. Vorzugsweise sind auf den Messstreifen inkrementelle oder absolute Markierungen aufgebracht, die von der Messeinheit ausgelesen werden können.

Insbesondere detektiert das Messsystem die Markierungen auf den Messstreifen. Dadurch kann die Relativbewegung zwischen Messsystem und Messstreifen ermittelt werden.

Vorzugsweise umfasst das wenigstens eine Messsystem wenigstens ein Messsystem pro Linearmotor des wenigstens einen Linearmotors. Vorzugsweise ist jeweils die Messeinheit oder der Messstreifen von jedem Messsystem derart fest mit dem entsprechenden Translator des wenigstens einen Linearmotors verbunden, dass die Messeinheit oder der Messstreifen der translatorischen Stellbewegung des Translators direkt folgt.

Bei Ausführungsformen mit einem Axial-Linearmotor ist vorzugsweise die Messeinheit des wenigstens ein Messsystems derart fest an dem Rollenwagen befestigt, dass die Messeinheit einer Stellbewegung des Translators des Axial-Linearmotors direkt folgt. Vorzugsweise ist jede Messeinheit des wenigstens ein Messsystems derart fest an dem Rollenwagen befestigt.

Bei Ausführungsformen, bei denen kein Axial-Linearmotor vorgesehen ist, ist die Messeinheit des wenigstens ein Messsystems vorzugsweise fest mit dem Fundament der Formgebungsvorrichtung verbunden.

In einer Ausführungsform ist der Messstreifen an einer Führungsschiene einer Linearführung, insbesondere der zuvor beschriebenen Linearführung, zum Führen des Translators und der wenigstens einen Formrolle ausgebildet. Vorzugsweise ist der Messstreifen jeweils an einer Führungsschiene befestigt, die derart fest mit dem Translator, dessen translatorischen Stellbewegung gemessen werden soll, verbunden ist, dass die Führungsschiene der translatorischen Stellbewegung des Translators direkt folgt.

Bei Ausführungsformen mit wenigstens einem Radial-Linearmotor ist der Messstreifen vorzugsweise derart fest an dem zuvor beschriebenen Rollenarm befestigt, dass der Messstreifen der translatorischen Stellbewegung des Rollenarms direkt folgt. Bei Ausführungsformen mit einem Axial-Linearmotor ist die Messeinheit vorzugsweise derart fest an dem zuvor beschriebenen Rollenwagen befestigt, dass die Messeinheit einer translatorischen Stellbewegung des Rollenwagen direkt folgt.

In einer Ausführungsform ist die Messeinheit mit einer Richtschiene verbunden, die sich durch einen Führungsspalt zwischen einem Führungswagen und einer Führungsschiene einer Linearführung, insbesondere der zuvor beschriebenen Linearführung, zum Führen des Translators erstreckt. Durch die Richtschiene kann insbesondere gewährleistet werden, dass die Relativbewegung des Führungswagens oder der Führungsschiene entlang der Richtschiene verläuft. Insbesondere bei Ausführungsformen, bei denen der Messstreifen an der Führungsschiene oder dem Führungswagen befestigt ist, kann dadurch gewährleistet werden, dass die Relativbewegung zwischen dem Führungswagen und der Führungsschiene der Relativbewegung zwischen Messeinheit und Messstreifen entspricht. Vorzugsweise erstreckt sich die Richtschiene in einem dafür vorgesehenen Spalt zwischen der Führungsschiene und dem Führungswagen. Insbesondere ist die Richtschiene bewegungsfest mit der Messeinheit verbunden. Insbesondere ist in der Richtschiene eine Öffnung, insbesondere eines Spalt, vorgesehen, über den ein optisches Signal, wie ein Lichtstrahl, von der Messeinheit auf den Messstreifen projezierbar ist und/oder von dem Messstreifen zurück zur Messeinheit reflektierbar ist. Insbesondere ist die Messeinheit des wenigstens ein Messsystems an dem Rollenwagen befestigt.

In einer Ausführungsform ist der Translator eines des wenigstens einen Linearmotors quer, insbesondere orthogonal, zu einer Rollendrehachse, um welche die wenigstens eine Formrolle drehbar ist, translatorisch verstellbar, um insbesondere die wenigstens eine Formrolle zum Formgeben in den Formabrollkontakt zu versetzen und nach erfolgter Formgebung von diesem zu lösen.

Vorzugsweise ist ein quer zur Rollendrehachse verstellbarer Translator als Sekundärteil ausgebildet. Vorzugsweise ist ein derartiges Sekundärteil in Radialrichtung bewegungsfest an einem Rollenarm befestigt, während das zugehörige Primärteil an einem Rollenwagen befestigt ist.

Unter dem Versetzen der Formrolle in den Formabrollkontakt ist insbesondere zu verstehen, dass die Formrolle wenigstens soweit quer zur Rollendrehachse verstellt wird, dass sie insbesondere mit ihrer Mantelfläche in Kontakt mit dem Glasintermediat steht. Vorzugsweise ist die Formrolle quer zur Rollendrehachse über den ersten Kontakt hinaus verstellbar, um das Glasintermediat quer zur Rollendrehachse zu verformen. Besonders bevorzugt ist die Formrolle im Formabrollkontakt quer zur Rollendrehachse weiter verstellbar, um eine graduelle, insbesondere stufenweise oder kontinuierliche, Verformung des Glasintermediates zu ermöglichen.

Insbesondere durch die Verwendung eines Linearmotors, kann das Versetzen der wenigstens einen Formrolle in den Formabrollkontakt besonders schnell und insbesondere präzise erfolgen. Insbesondere kann durch die direkte Kopplung von Formrolle und Translator insbesondere in Kombination mit dem zuvor beschriebenen Messsystem und/oder der zuvor beschriebenen Linearführung die weitere Zustellung zur Verformung des Glasintermediates präzise ausgeführt werden.

Unter dem Lösen der Formrolle aus dem Formabrollkontakt ist insbesondere zu verstehen, dass die Formrolle quer zur Rollendrehachse soweit verstellt wird, dass sie insbesondere mit ihrer Mantelfläche nicht mehr im Kontakt mit dem Glasintermediat steht.

In einer Ausführungsform ist der Translator eines des wenigstens einen Linearmotors längs, insbesondere parallel, zu einer Rollendrehachse, um welche die wenigstens eine Formrolle drehbar ist, translatorisch verstellbar, insbesondere zur Glasmassenkompensation translatorisch verstellbar.

Vorzugsweise ist ein längs zur Rollendrehachse verstellbarer Translator als Primärteil ausgebildet. Vorzugsweise ist ein derartiges Primärteil bewegungsfest mit einem Rollenwagen verbunden, während das zugehörige Sekundärteil mit einem Fundament der Formgebungsvorrichtung verbunden ist.

Durch die translatorische Verstellbarkeit längs zur Rollendrehachse kann insbesondere bei der Formgebung des Glasintermediates verdrängtes Material entlang der Rollendrehachse verteilt werden. Insbesondere ist der Translator hierfür derart fest mit der Formrolle verbunden, dass die Formrolle im Formabrollkontakt einer translatorischen Stellbewegung des Translators direkt folgt.

In einer Ausführungsform umfasst die wenigstens eine Formrolle zwei Formrollen und der wenigstens eine Linearmotor zwei Linearmotoren mit jeweils einem Translator, wobei jeweils einer der zwei Translatoren mit jeweils einer der zwei Formrollen derart fest verbunden ist, dass jeweils eine der zwei Formrolle einer translatorischen Stellbewegung des jeweiligen Translators direkt folgt. Insbesondere sind die zwei Linearmotoren als Radial-Linearmotoren ausgestaltet.

In einer Ausführungsform sind die zwei Translatoren derart unabhängig voneinander mit jeweils einer Formrolle verbunden, dass die zwei Formrollen unabhängig voneinander translatorisch verstellbar sind.

Insbesondere sind die zwei Formrollen in Radialrichtung relativ zueinander verstellbar. Insbesondere ist die bewegungsfeste Verbindung jeweils eines Translators mit jeweils einer Formrolle über jeweils einen Rollenarm und/oder über jeweils eine Linearführung realisiert. Vorzugsweise ist jeder der Rollenarme über eine separate Linearführung, insbesondere Radialführung, entlang einer Radial-Zustellachse geführt. Vorzugsweise ist jeweils ein Translator, eine Formrolle und eine Führungsschiene oder ein Führungswagen bewegungsfest mit dem Rollenarm verbunden während der entsprechend verbleibende Teil der Linearführung und der Stator bewegungsfest mit einem Rollenwagen verbunden ist. Insbesondere ist in wenigstens zwei, vorzugsweise in jede, der Linearführungen ein Messsystem wie zuvor beschrieben integriert.

Insbesondere sind die zwei Formrollen in Radialrichtung über eine gemeinsame Radial-Zustellachse relativ zueinander verstellbar.

Insbesondere sind die zwei Formrollen jeweils über einen Rollenmotor oder ein Radiallager bewegungsfest mit dem jeweiligen Rollenarm verbunden.

Insbesondere weist das wenigstens eine Messsystem für jede der zwei Formrollen jeweils ein Messsystem auf. Insbesondere ist jeweils der Messstreifen eines Messsystems bewegungsfest an der Schiene eines entsprechenden Führungssystems und/oder an einem entsprechenden Rollenarm befestigt.

In einer Ausführungsform umfasst der wenigstens eine Linearmotor wenigstens einen Linearmotor mit einem quer, insbesondere orthogonal, zur Rollendrehachse translatorisch verstellbaren Translator und einen Linearmotor mit einem längs, insbesondere parallel, zur Rollendrehachse verstellbaren Translator.

Der wenigstens eine Linearmotor mit einem quer zur Rollendrehachse verstellbaren Translator kann auch als Radial-Linearmotor bezeichnet werden. Vorzugsweise umfasst der wenigstens eine Radial-Linearmotor zwei der zuvor beschriebenen Radial-Linearmotoren.

Der Linearmotor mit einem längs zur Rollendrehachse verstellbaren Translator kann auch als Axial-Linearmotor bezeichnet werden. Vorzugsweise ist der Translator des Axial-Linearmotors derart fest mit der wenigstens einen Formrolle verbunden, dass die wenigstens eine Formrolle einer Stellbewegung des Translators in Axialrichtung direkt folgt. Vorzugsweise ist der Translator des Axial-Linearmotors dafür in Axialrichtung bewegungsfest mit einem Rollenwagen verbunden, der wiederum in Axialrichtung bewegungsfest mit der wenigstens einen Formrolle verbunden ist. Vorzugsweise ist der Rollenwagen über einen, insbesondere über jeweils einen pro Formrolle, in Radialrichtung translatorisch verstellbaren Rollenarm in Axialrichtung bewegungsfest mit der wenigstens einen Formrolle verbunden. Insbesondere ist der Rollenwagen über eine Axialführung, insbesondere über zwei Axialführungen, entlang einer Axial-Zustellachse geführt. Insbesondere ist der Führungswagen der Axialführung, insbesondere die zwei Führungswagen der zwei Axialführungen, bewegungsfest mit dem Rollenwagen verbunden, während die Führungsschienen der Axialführung, insbesondere die zwei Führungsschienen der zwei Axialführung, bewegungsfest mit dem Fundament der Formgebungsvorrichtung verbunden sind. Insbesondere ist in jeder der Axialführung jeweils ein Messsystem wie oben beschrieben integriert.

In einer Ausführungsform betrifft die Erfindung eine eine Anlage zum Herstellen eines insbesondere rotationssymmetrischen Glaszeuges, wie einer Glasspritze, einer Glaskarpule, eines Glasvials oder einer Glasampulle. Insbesondere kann die Anlage zum Herstellen eines Glaszeuges aus Borosilikatglas geeignet sein. Die Anlage kann eine Glaserzeugungsanlage, insbesondere eine Borosilikatglaserzeugungsanlage, sein. Die Anlage kann zum Herstellen eines pharmazeutischen Glaszeuges geeignet sein. Pharmazeutische Glaszeuge zeichnen sich insbesondere dadurch aus, dass sie eine Formgenauigkeit der Endkontur von 0,03 Millimetern aufweisen.

Die Anlage umfasst eine Aufnahme zum drehbaren Halten eines Glasintermediates, insbesondere eines Glasrohrs, und die zuvor beschriebene Vorrichtung, insbesondere Formgebungsvorrichtung, zum Umformen des Glasintermediates.

Die Aufnahme ist insbesondere um eine Aufnahme-Drehachse drehbar. Insbesondere weist die Anlage einen Aufnahmemotor auf, über den die Aufnahme um eine Aufnahme-Drehachse drehbar ist. Die Aufnahme kann insbesondere als Futter ausgebildet sein. Insbesondere ist die Aufnahme zum lösbaren axialen und/oder radialen Fixieren eines Glasintermediates geeignet. Insbesondere erstreckt sich die Aufnahme-Drehachse im Wesentlichen in einer Horizontalebene. Im Wesentlichen bedeutet in diesem Zusammenhang insbesondere, dass die Aufnahme-Drehachse um maximal 1°, 5°, 10° oder 20° gegenüber der Horizontalebene geneigt ist. Die Aufnahmen zum drehbaren Halten eines Glasintermediates unterscheiden sich insbesondere dadurch von gewöhnlichen Aufnahmen, wie beispielsweise Aufnahmen zum drehbaren halten von zu bearbeitenden Metallstücken, dass sie leicht zerbrechliche Glasintermediate aufnehmen und wieder freigeben können, ohne diese zu beschädigen, beispielsweise durch Kratzer im Glas oder durch Zerbrechen des Glases.

In einer Ausführungsform umfasst die Anlage ein Karussell zum Verfahren der Aufnahme zu unterschiedlichen Fertigungsstationen oder zum Verfahren der wenigstens einen Formrollen zu unterschiedlichen Aufnahmen für Glasintermediate. Vorzugsweise ist das Karussell zum Verfahren der Aufnahme zu unterschiedlichen Fertigungsstationen ausgebildet. Vorzugsweise umfasst das Karussell mehrere der zuvor beschriebenen Aufnahmen zum Halten mehrerer Glasintermediat. Vorzugsweise umfasst das Karussell wenigstens 2, 4 oder 6, insbesondere wenigstens 8 oder 10, Aufnahmen. Insbesondere ist das Karussell um eine Karussellachse drehbar. Insbesondere sind die mehreren Aufnahmen in Umfangsrichtung am Karussell verteilt angeordnet. Vorzugsweise erstreckt sich die Karussellachse im Wesentlichen in Gravitationsrichtung. Unter im Wesentlichen ist in diesem Zusammenhang insbesondere zu verstehen, dass die Karussellachse um maximal 1°, 5°, 10° oder 20° gegenüber der Gravitationsrichtung geneigt ist.

Vorzugsweise wird zum Herstellen eines Glaszeuges ein Glasintermediat an der wenigstens einen Aufnahme befestigt. Zur Herstellung des Glaszeuges ist das Glasintermediat vorzugsweise durch Drehen des Karussells um die Karussellachse in den Arbeitsbereich der verschiedenen Fertigungsstationen verbringbar. Dazu sind die wenigstens eine Aufnahme und die wenigstens eine Fertigungsstation, insbesondere Formgebungsvorrichtung, derart zueinander positioniert, dass das Glasintermediat durch Drehen des Karussells um die Karussellachse in den Arbeitsbereich der wenigstens einen Fertigungsstation verbringbar ist. Dabei ist die Aufnahme insbesondere in Fertigungsumfangsrichtung nacheinander in den Arbeitsbereich verschiedener Fertigungsstation verbringbar.

Die zuvor beschriebene wenigstens eine Formrolle und der wenigstens eine Linearmotor sind insbesondere an einer Fertigungsstation in Form einer Formgebungsvorrichtung ausgeführt. Vorzugsweise sind mehrere, insbesondere wenigstens zwei, drei oder vier, Formgebungsvorrichtungen in Fertigungsumfangsrichtung um die Karussellachse verteilt angeordnet. Insbesondere weist jede der Formgebungsvorrichtungen wenigstens eine wie zuvor beschriebene Formrolle und wenigstens einen wie zuvor beschriebenen Linearmotor auf. Vorzugsweise sind die Formgebungsvorrichtungen in Fertigungsumfangsrichtung hintereinander angeordnet, um das Glasintermediat in mehreren Schritten zum Glaszeug umzuformen. Vorzugsweise ist in Fertigungsumfangsrichtung stromaufwärts der wenigstens einen Formgebungsvorrichtung wenigstens ein, insbesondere wenigstens zwei, drei oder vier, Brenner zum Erwärmen des Glasintermediates angeordnet. Insbesondere ist zwischen jeder der wenigstens einen Formgebungsvorrichtung wenigstens ein, insbesondere wenigstens zwei, Brenner vorgesehen, um das Glasintermediat zwischen den einzelnen Umformschritten erneut zu erwärmen.

Stromaufwärts der ersten Formgebungsvorrichtung und der ersten Brenner ist vorzugsweise eine Prüfstation vorgesehen, um die Position und den Planschlag des Glasintermediates in der Aufnahme zu vermessen. Hierzu weist die Prüfstation vorzugsweis eine Kamera auf.

Stromabwärts der letzten Formgebungsvorrichtung ist vorzugsweise eine Kühlvorrichtung zum Abkühlen des Glaszeuges nach erfolgter Formgebung zu bewirken.

Vorzugsweise ist stromabwärts der letzten Formgebungsvorrichtung, insbesondere stromabwärts der letzten Formgebungsvorrichtung und der Kühlvorrichtung, eine Prüfstation zum Prüfen der Geometrie des Glaszeuges und/oder eine Prüfstation zum Detektieren von Kratzern und/oder Sprüngen im Glaszeug vorgesehen. Vorzugsweise ist stromabwärts der letzten Formgebungsvorrichtung, insbesondere stromabwärts der letzten Formgebungsvorrichtung, der Kühlvorrichtung und der wenigstens ein Prüfstation, eine Übergabevorrichtung zum Übergeben des Glaszeuges zur weiteren Bearbeitung vorgesehen. Die Übergabevorrichtung kann insbesondere Mittel zum Auffangen von aus der Aufnahme ausgeworfen Glaszeugen und/oder zum Transportieren der Glaszeuge zu weiteren Bearbeitungsstation, wie Flanschformstationen, aufweisen.

Ferner betrifft die Erfindung ein Glaszeug, wie eine Glasspritze, eine Glaskarpule, ein Glasvial oder eine Glasampulle, das mit der zuvor beschriebenen Vorrichtung oder Anlage hergestellt ist. Insbesondere ist das Glaszeug ein Borisilikatglaszeug. Insbesondere ist das Glaszeug ein pharmazeutisches Glaszeug. Insbesondere ist das Glaszeug ein pharmazeutisches Borisilikatglaszeug.

Es hat sich herausgestellt, dass durch den Einsatz von Linearmotoren die Taktzeiten zur Umformung von Glasintermediaten, insbesondere Herstellung von Glaszeugen, deutlich reduziert werden kann. Insbesondere konnten durch die hohe Dynamik der Linearmotoren die Taktzeiten gegenüber bekannten Linearantrieben, beispielsweise mit Drehmotor und Schneckengetriebe, halbiert werden. Insbesondere konnten die erforderlichen Zeiten für die Zustellung der Formrollen halbiert werden. Durch die zuvor beschriebenen Kombination wenigstens eines Linearmotors mit einer Linearführungen und einem Messsystem, insbesondere durch die Integration des Messsystems in die Linearführungen, konnte eine erstaunlich hohe Formgenauigkeit erzielt werden. Insbesondere konnten Glaszeuge mit einer Formgenauigkeit von 0,03 mm der Endkontur erzeugt werden. Insbesondere konnten durch die fest Verbindung von Messstreifen oder Messeinheit mit dem Translator und der Formrolle Widerholgenauigkeiten von wenigen Mikrometern erzielt werden. Als besonders vorteilhaft hat sich die Kombination von Radial-Linearmotoren zur Zustellung der Formrollen in Radialrichtung, um das Glasintermediat in Radialrichtung umzuformen, und von Axial-Linearmotoren zur Zustellung der Formrollen in Axialrichtung für die Glasmassenkompensation herausgestellt.

Gleichzeitig konnte durch die Verwendung von Linearmotoren gegenüber der Verwendung von Drehmotoren das erforderliche Übersetzungsgetriebe zur Bereitstellung einer translatorischen Stellbewegung eingespart werden. Dadurch konnte die Komplexität der Vorrichtung reduziert werden. Insbesondere konnte dadurch die erziehbare Formgenauigkeit der Endkontur der Glaszeuge weiter erhöht werden.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine Seitenansicht einer erfindungsgemäßen Vorrichtung (Formgebungsvorrichtung);
- Figur 2: eine Vorderansicht auf die Formgebungsvorrichtung gemäß Figur 1;
- Figur 3: eine Explosionsdarstellung eines Linearmotors, einer Linearführung und eines Messsystems der Formgebungsvorrichtung gemäß Figur 1;
- Figur 4: eine Schnittansicht gemäß der Schnittlinie IV-IV in Figur 1;
- Figur 5: eine Schnittansicht gemäß der Schnittlinie V-V in Figur 2;
- Figur 6: eine Schnittansicht gemäß der Schnittlinie VI-VI in Figur 2;
- Figur 7: eine schematische Teildarstellung einer Anlage zum Herstellen von Glaszeugen gemäß Figur 8; und
- Figur 8: eine schematische Darstellung einer Anlage zum Herstellen von Glaszeugen.

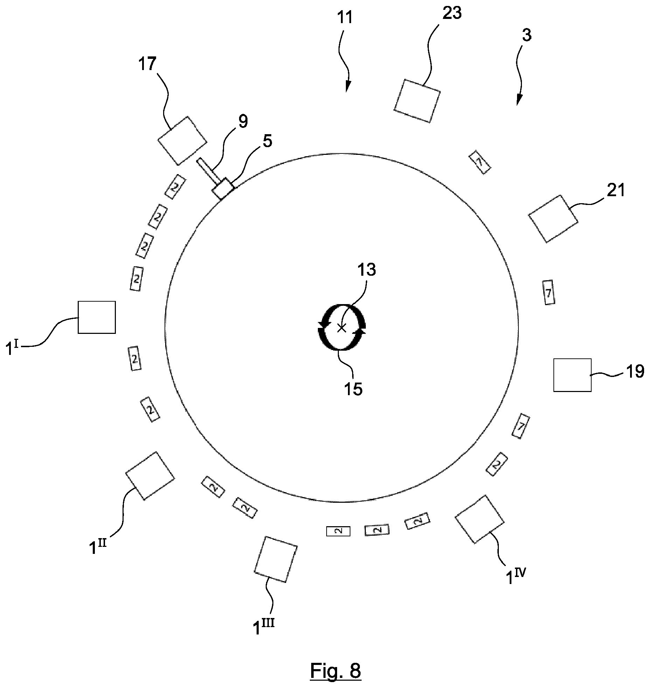

Figur 8 zeigt eine schematische Darstellung einer Anlage 3 zur Herstellung eines Glaszeuges, in der vier Formgebungsvorrichtung 1^{I}, 1^{II}, 1^{III}, 1^{IV} schematisch abgebildet sind. In Figur 8 ist schematisch eine Aufnahme 5 zum drehbaren Halten eines Glasintermediates 9 dargestellt. Die Anlage 3 umfasst ein Karussell 11 an dem die Aufnahme 5 angebracht ist. Das Karussell 11 ist um die Karussellachse 13 drehbar, wodurch die Aufnahme 9 zusammen mit dem Glasintermediat 9 den vier dargestellten Formgebungsvorrichtungen 1^{I}, 1^{II}, 1^{III}, 1^{IV} zugeführt werden kann. Dabei wird das Glasintermediat in Fertigungsumfangsrichtung 15 nacheinander den einzelnen Formgebungsvorrichtungen 1^{I}, 1^{II}, 1^{III}, 1^{IV} zugeführt. Vor der ersten Formgebungsvorrichtung 1^{I} sowie zwischen den darauf folgenden Formgebungsvorrichtungen 1^{II}, 1^{III} und hinter der letzten Formgebungsvorrichtung 1^{IV} sind jeweils Brenner 2 zum Erwärmen des Glasintermediates 9 angeordnet.

In Fertigungsumfangsrichtung 15 fertigungsrichtungsaufwärts der ersten Formgebungsvorrichtung 1^{I} ist eine erste Prüfstation 17 vorgesehen, um die Position und den Planschlag des Glasintermediates 9 in der Aufnahme 5 zu vermessen.

In Fertigungsumfangsrichtung 15 fertigungsrichtungsabwärts der letzten Formgebungsvorrichtung 1^{IV} und des letzten Brenners 2 ist eine erste Kühlvorrichtung 7 zum Abkühlen des Glaskörpers nach erfolgter Formgebung zu bewirken.

In Fertigungsumfangsrichtung 15 fertigungsrichtungsabwärts der letzten Formgebungsvorrichtung 1^{IV}, und der ersten Kühlvorrichtung 2, ist eine zweite Prüfstation 19 zum Prüfen der Geometrie des Glaszeuges vorgesehen. In Fertigungsumfangsrichtung 15 fertigungsrichtungsabwärts der zweiten Prüfstation 19 ist eine zweite Kühlvorrichtung 7 und darauf folgenden eine dritte Prüfstation 21 zum Detektieren von Kratzern und/oder Sprüngen im Glaszeug vorgesehen. In Fertigungsumfangsrichtung 15 fertigungsrichtungsabwärts der dritten Prüfstation 21 ist eine dritte Kühlvorrichtung 7 vorgesehen. In Fertigungsumfangsrichtung 15 fertigungsrichtungsabwärts der dritten Kühlvorrichtung 7 ist eine Übergabevorrichtung 23 zum Übergeben des Glaszeuges zur weiteren Bearbeitung vorgesehen. Die Übergabevorrichtung kann insbesondere Mittel zum Auffangen von aus der Aufnahme 5 ausgeworfenen Glaszeugen und/oder zum Transportieren der Glaszeuge zu weiteren Bearbeitungsstation (nicht dargestellt), wie Flanschformstationen, aufweisen.

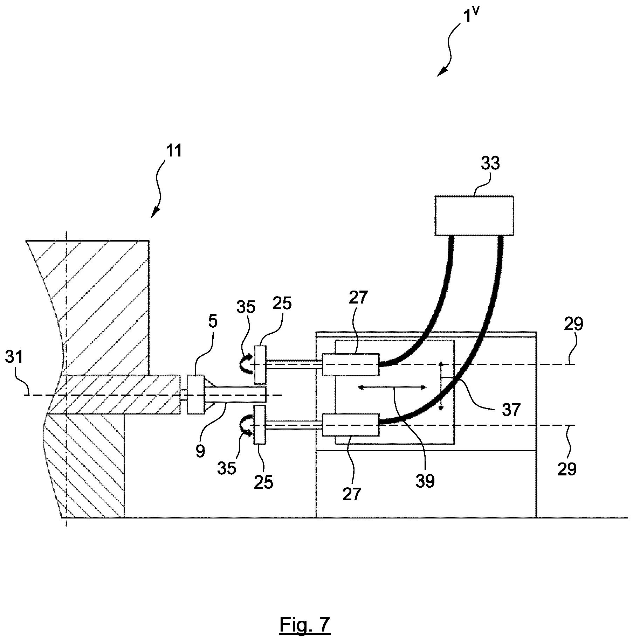

Figur 7 zeigt eine schematische Teildarstellung einer Anlage gemäß Figur 8, in der ein Ausschnitt des Karussells 11 mit einer ein Glasintermediat 9 haltenden Aufnahme 5 und eine der Formgebungsvorrichtungen 1^{I}, 1^{II}, 1^{III}, 1^{IV} schematisch als Formgebungsvorrichtung 1^{V} dargestellt ist.

Die Aufnahme 5 und das Glasintermediat 9 sind über einen nicht dargestellten Aufnahmemotor um eine Aufnahme-Drehachse 31 drehbar.

Die Formgebungsvorrichtung 1^{V} umfasst zwei Formrollen 25, die jeweils über einen Rollenmotor 27 um jeweils eine Rollendrehachse 29 drehbar sind. Die Rollenmotoren 27 werden über eine gemeinsame Steuerung 33 gesteuert, um die Drehzahl der Formrollen 25 in Umfangsrichtung 35 um die Rollendrehachse 29 zu steuern. Die nachfolgend detailliert beschriebene translatorische Verstellbarkeit der Formrollen ist durch die zwei Pfeile dargestellt. Der vertikal ausgerichtete Pfeil stellt die translatorische Verstellbarkeit der Formrollen 25 quer zu den Rollendrehachsen 29 und zur Aufnahme-Drehachse 31, insbesondere in Radialrichtung 37, dar. Der horizontal ausgerichtete Pfeil 39 stellt die translatorische Verstellbarkeit der Formrollen 25 längs zu den Rollendrehachsen 29 und zur Aufnahme-Drehachse 31, insbesondere in Axialrichtung 39, dar.

Die dargestellte Position der Formrollen 25 relativ zum Glasintermediat 9 stellt eine Position dar, in der die Formrollen 25 kurz vor dem Formabrollkontakt mit dem Glasintermediat 9 stehen. Um die Formrollen 25 in den Formabrollkontakt mit dem Glasintermediat 9 zu verbringen, müssen die Formrollen 25 in Radialrichtung 39 noch zumindest soweit verstellt werden, dass der zwischen den Formrollen 25 und dem Glasintermediat 9 bestehende Spalt überbrückt wird.

Die translatorische Verstellbarkeit der Formrollen 25 in Radialrichtung 37 dient insbesondere der Formgebung des Glasintermediates 9 in Radialrichtung 37. Die translatorische Verstellbarkeit der Formrollen 25 in Axialrichtung 39 dient insbesondere der axialen Zustellung der Formrollen in Abhängigkeit der axialen Position des zu verformenden Bereiches des Glasintermediates. Insbesondere in Abhängigkeit der Dicke des Glasintermediates kann die axiale Position und die Länge in Axialrichtung des zu verformenden Bereiches variieren. Insbesondere kann in einem vorgelagerten Schritt insbesondere bei dem Zuschneiden des Glasintermediates dessen Dicke ermittelt werden und in Abhängigkeit der Dicke die Länge und/oder axiale Position des zu verformenden Bereiches ermittelt werden. Anschließend kann der Vorrichtung die Dicke, die Länge und/oder die axiale Position des zu verformenden Bereiches übermittelt werden, sodass die axiale Position der Formrollen entsprechend eingestellt werden können. Dadurch können insbesondere auch bei variabler Dicke des Glasintermediates Glaszeuge mit hoher Formgenauigkeit hergestellt werden. Diese Berücksichtigung der Variation der Dicke des Glasintermediates kann als Glasmassenkompensation bezeichnet werden.

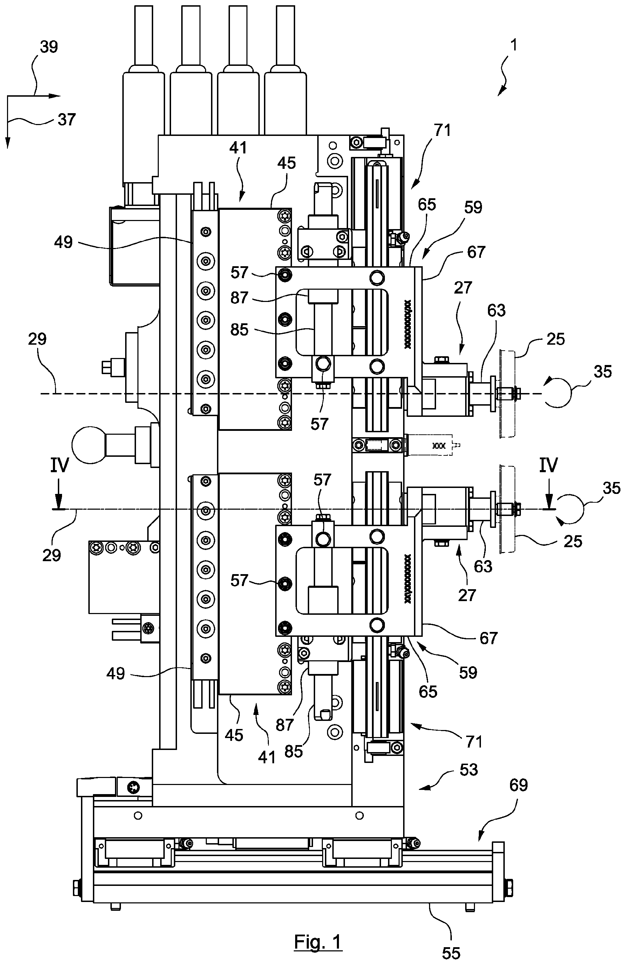

Die Figuren 1 bis 6 zeigen verschiedene Ansichten und Darstellungen einer Formgebungsvorrichtung 1, wie sie in einer Anlage 3, wie schematisch in den Figuren 7 und 8 dargestellt, für eine oder mehrere der Formgebungsvorrichtung 1^{I}, 1^{II}, 1^{III}, 1^{IV}, 1^{V} eingesetzt werden kann.

Die Formgebungsvorrichtung 1 weist zwei Formrollen 25 auf, die zum Formgeben in einen Formabrollkontakt mit dem Glasintermediat (in den Figuren 1 bis 6 nicht dargestellt) translatorisch verstellbar sind. Ferner ist ein in Axialrichtung 39 translatorisch verstellbarer Umformdorn 99 dargestellt. Der Umformdorn 99 ist koaxial zu den Rollen-Drehachsen 29 und insbesondere zur Aufnahme-Drehachse 31 ausgerichtet. Der Umformdorn 99 ist translatorisch in das Innere eines insbesondere von der Aufnahme 5 gehaltenen Glasintermediates 9 verstellbar, um das Glasintermediat 9 im Formabrollkontakt innenseitig zu formen, während die Formrollen 25 das Glasintermediat 9 außenseitig formen.

Ferner weist die Formgebungsvorrichtung 1 drei Linearmotoren 41, 43 zum translatorischen Stellen der drei Formrollen 25 auf. Die Linearmotoren 41, 43 weisen jeweils einen Translator 45, 47 und einen Stator 49, 51 auf. Die Translatoren 45, 47 sind jeweils derart fest mit jeweils wenigstens einer der Formrollen 25 verbunden, dass die jeweilige Formrollen 25 einer translatorischen Stellbewegung des Translators 45, 47 direkt folgt.

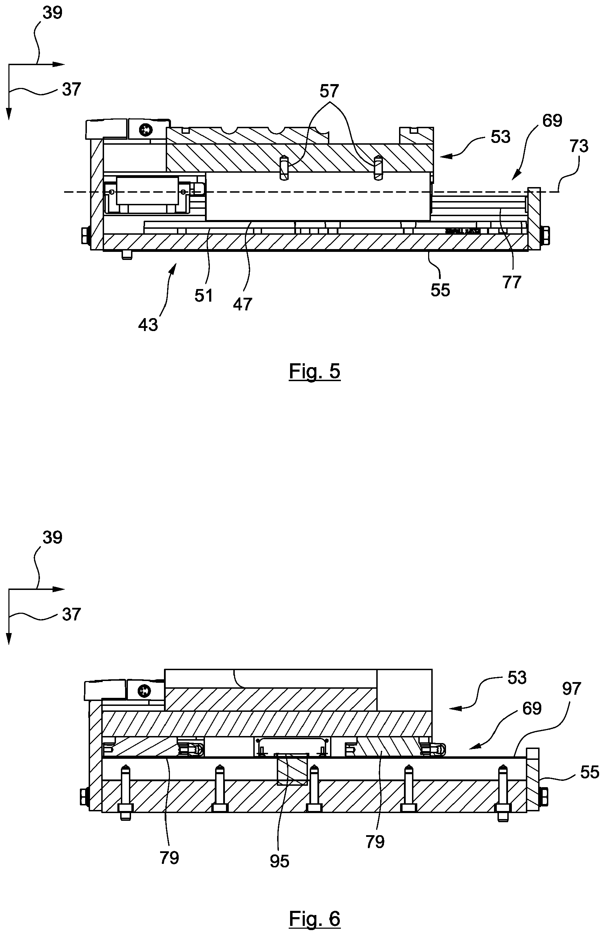

Von den drei Linearmotoren 41, 43 sind zwei Linearmotoren 41 als Radial-Linearmotoren 41 ausgestaltet und ein Linearmotor 43 als Axial-Linearmotor 43 ausgestaltet. Die Radial-Linearmotoren 41 sind besonders gut in Figur 1, Figur 3 und Figur 4 erkennbar. Der Axial-Linearmotor ist in Figur 5 erkennbar.

Bei den Axial-Linearmotor 43 ist der Translator 47 in Axialrichtung 39 translatorisch verstellbar und der Stator 51 in Axialrichtung 39 nicht verstellbar. Bei dem Axial-Linearmotor 43 ist der Translator 47 durch das Primärteil (Elektromagnet) und der Stator 51 durch das Sekundärteil (Dauermagnet) gebildet.

Bei den Radial-Linearmotoren 41 ist der Translator 45 in Radialrichtung 37 translatorisch verstellbar und der Stator 49 in Radialrichtung 37 nicht verstellbar. Sowohl der Translator 45 als auch der Stator 49 der beiden Radial-Linearmotoren 41 sind jedoch über den Axial-Linearmotor 43 in Axialrichtung verstellbar. Bei den Radial-Linearmotoren 41 ist der Translator 45 durch das Sekundärteil (Permanentmagnet) und der Stator 49 durch das Primärteil (Elektromagnet) gebildet.

Die Formgebungsvorrichtung 1 umfasst einen in Axialrichtung 39 translatorisch verstellbaren Rollenwagen 53. Wie insbesondere in Figur 5 erkennbar ist, ist der Translator 47 des Axial-Linearmotors derart fest mit dem Rollenwagen 53 verbunden, dass der Rollenwagen 53 einer translatorischen Stellbewegung in Axialrichtung 39 des Translator 47 direkt folgt. Die bewegungsfeste Verbindung ist in dieser Ausführung durch Verschraubung 57 des Translator 47 mit dem Rollenwagen 53 realisiert. Der Stator 51 des Axial-Linearmotors 43 ist fest mit einem Fundament 55 der Formgebungsvorrichtung 1 befestigt. Wie weiter unten im Detail beschrieben, ist jede der Formrollen 25 über den jeweiligen Radial-Linearmotor 41 in Axialrichtung 39 bewegungsfest mit dem Rollenwagen 53 befestigt, sodass die Formrollen 25 einer translatorischen Stellbewegung des Translator 47 in Axialrichtung 39 direkt folgt.

Wie insbesondere den Figuren 1, 2 und 4 entnehmbar ist, umfasst die Formgebungsvorrichtung zwei Rollenarme 59, wobei jeweils eine der zwei Formrollen 25 über jeweils einen Rollenarm 59 derart fest mit dem Translator 45 des Radial-Linearmotors 41 verbunden ist, dass jede der Formrollen 25 einer translatorischen Stellbewegung jeweils eines Translators 45 in Radialrichtung 37 direkt folgt. Die bewegungsfeste Verbindung zwischen den Rollenarmen 59 und den Translatoren 45 ist in dem dargestellten Beispiel über Verschraubungen 57 realisiert.

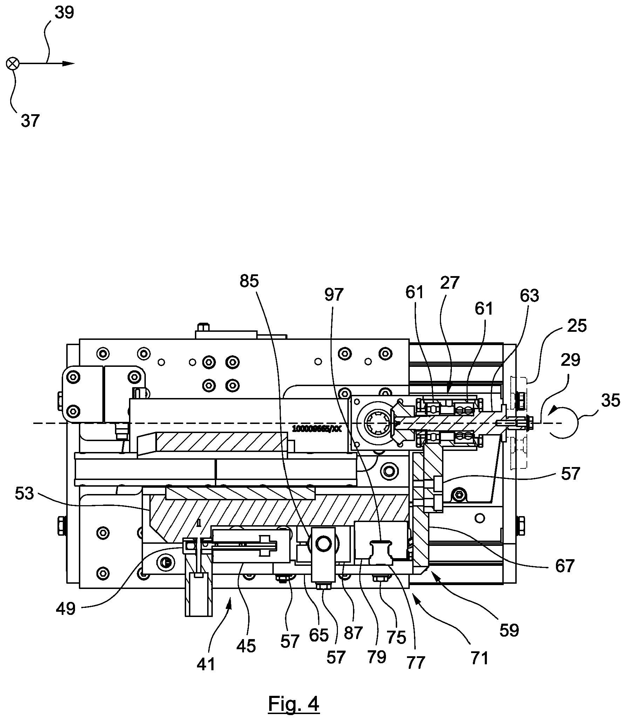

Die bewegungsfeste Verbindung der Rollenarm 59 mit der jeweiligen Formrollen 25 ist, wie insbesondere Figur 4 zu entnehmen, jeweils über Verschraubung der Rollenarme 59 mit jeweils einem Rollenmotor 27 realisiert, der gleichzeitig das Radiallager 27 der jeweiligen Formrollen 25 bildet. Dadurch wird der Rollenmotor 27 bzw. das Radiallager 27 derart fest über den Rollenarm 59 mit dem jeweiligen Translator 45 verbunden, dass der Rollenmotor 27 bzw. das Radiallager 27 einer translatorischen Stellbewegung des Translators 45 in Radialrichtung 37 direkt folgt. Die Radiallager 27 lagern die Formrollen jeweils in Radialrichtung 37 und in Axialrichtung 39. Dafür weisen die Radiallager 27 zwei Kugellager 61 auf, die eine die jeweilige Formrollen 25 aufnehmende Motorabtriebswelle 63 lagern.

Die Rollenarme 59 weisen einen sich in Axialrichtung 39 erstreckenden Axialarmabschnitt 65 und einen sich von dem Axialarmabschnitt 65 radial zur jeweiligen Formrollen 25 hin erstreckenden Radialarmabschnitt 67 auf. Der Axialarmabschnitt 65 dient der Verbindung des Translators 45 mit der nachfolgend beschriebenen Radialführung 71 und mit dem nachfolgend beschriebenen Messsystem 89. Der Radialarmabschnitt 67 dient der Befestigung des Rollenmotors 27 bzw. des Radiallagers 27 mit dem Axialarmabschnitt 65.

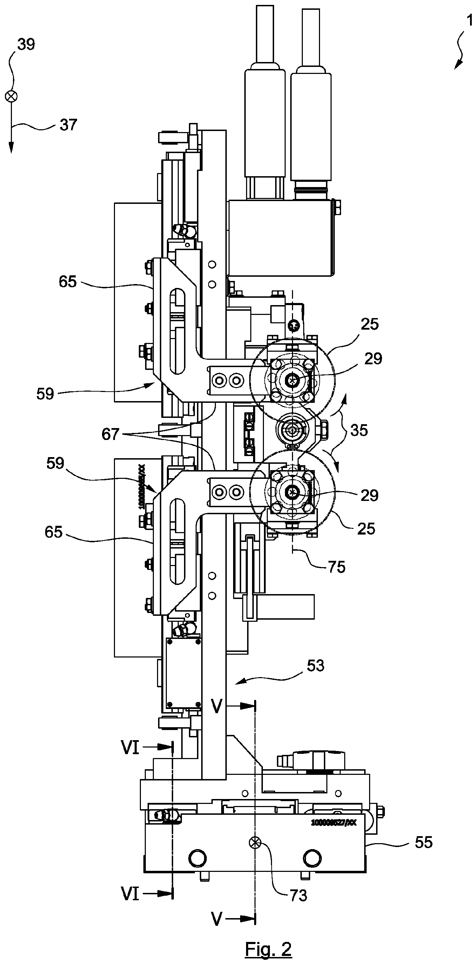

Die Formgebungsvorrichtung 1 umfasst vier Linearführungen 69, 71 zum Führen der Translatoren 45, 47 entlang von Zustellachsen 73, 75, nämlich zwei Axialführungen 69 zum Führen das Translator 47 des Axial-Linearmotors 43 entlang einer sich in Axialrichtung 39 erstreckende Axial-Zustellachse 73 und zwei Radialführungen 71 zum Führen der Translatoren 45 der Radial-Linearmotoren 41 entlang einer sich in Radialrichtung 37 erstreckenden Radial-Zustellachse 75. Wie insbesondere Figur 2 und Figur 5 entnehmbar ist, ist unter dem Führen entlang der Zustellachse 73, 75 insbesondere ein Führen des jeweiligen Translators 45, 47 parallel zu der Zustellachse 73, 75 zu verstehen. Dabei kann der Translator insbesondere versetzt zu der jeweiligen Zustellachse 73, 75 translatorisch verfahrbar sein. Die Linearführungen 69 ,71 weisen jeweils eine Führungsschiene 77 und einen Führungswagen 79 auf, die entlang der Zustellachse 73, 75 zueinander beweglich sind. Die Translatoren 45, 47 sind jeweils derart fest mit der Führungsschiene 77 oder dem Führungswagen 79 einer Linearführungen 69, 71 verbunden, dass die Führungsschiene 77 oder der Führungswagen 79 der translatorischen Stellbewegung des jeweiligen Translators 45, 47 direkt folgt.

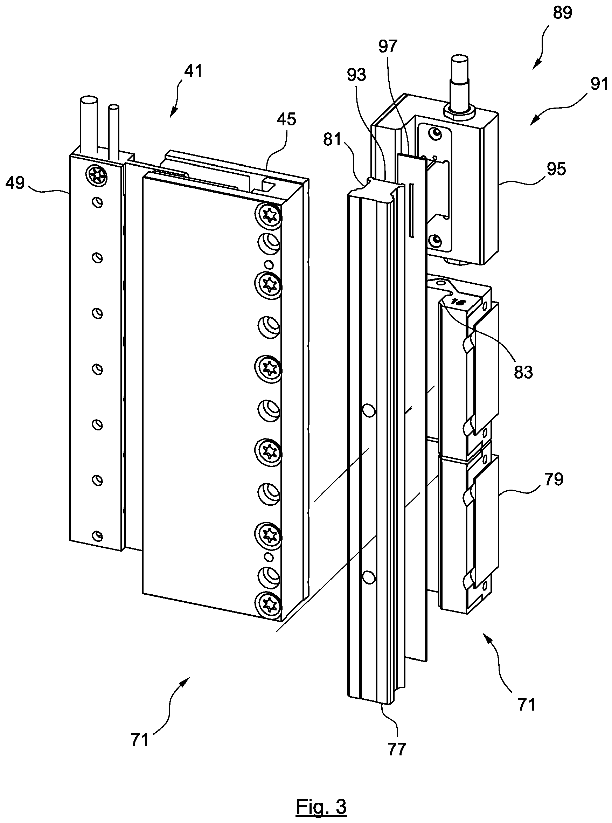

Eine Radialführung 71 ist exemplarisch in Explosionsdarstellung in Figur 3 sowie in Schnittansicht in Figur 4 dargestellt. Der Führungswagen 79 umgreift die Führungsschiene 77 derart, dass die Führungsschiene 77 in Radialrichtung 37 translatorisch in dem Führungswagen 79 geführt ist. Die Führungsschiene 77 ist mittels Verschraubung 75 derart fest mit dem Rollenarm 59 verbunden, dass die Führungsschiene 77 einer translatorischen Stellbewegung des Rollenarms 59 in Radialrichtung 37 direkt folgt. Dadurch sind der Translator 45 des Radial-Linearmotors 41 sowie die Formrollen 25 über den Rollenarm 59 in Radialrichtung 37 bewegungsfest mit der Führungsschiene 77 verbunden. Der Führungswagen 79 der Radialführung 71 ist, wie insbesondere Figur 4 entnehmbar, in Axialrichtung 39 bewegungsfest mit dem Rollenwagen 53 verbunden, sodass der Führungswagen 79 einer translatorischen Stellbewegung des Rollenwagen 53 in Axialrichtung 39 direkt folgt. Wie ferner Figur 4 entnehmbar ist, ist die Führungsschiene 77 der Radialführung 71 in Axialrichtung bewegungsfest mit dem Führungswagen 79 verbunden, sodass die Führungsschiene 77 ebenfalls einer translatorischen Stellbewegung des Rollenwagens 53 in Axialrichtung 39 direkt folgt. Wie insbesondere Figur 3 entnehmbar ist, weist die Führungsschiene 77 hierfür sich in Radialrichtung 37 erstreckende Nuten 81 auf, in die sich in Radialrichtung erstreckende Vorsprünge 83 des Führungswagens 79 eingreifen. Da die Führungsschiene 77 der Radialführung 71 fest mit dem Rollenarm 59 verbunden ist, folgen auch der fest mit dem Rollenarm verbundene Translator 45 des Radial-Linearmotors 41 sowie die fest mit dem Rollenarm verbundene Formrolle 25 einer translatorischen Stellbewegung des Rollenwagens 53 in Axialrichtung 39 direkt.

Wie insbesondere Figur 1 und Figur 4 entnehmbar ist, weist in der dargestellten Ausführungsform jede der Radialführungen 71 zusätzlich zu der Führungsschiene 77 und dem Führungswagen 79 noch einen Führungskolben 85 und einen Führungszylinder 87 auf, der den Führungskolben 85 in Radialrichtung 37 translatorisch führt. Der Führungskolben 85 ist über eine Verschraubung 57 in Radialrichtung 37 bewegungsfest mit dem Rollenarm 59 verbunden. Der Führungszylinder 87 ist in Radialrichtung 37 und in Axialrichtung 39 bewegungsfest mit dem Rollenwagen 53 verbunden. Es hat sich gezeigt, dass durch das zusätzliche vorsehen eines Führungskolbens 85 und eines Führungszylinders 87, die Führungsschiene 77 und der Führungswagen 79 der Radialführung 71 entlastet werden können, sodass das nachfolgend beschriebene Messsystem 89 zuverlässiger zur Messung der translatorischen Stellbewegung an der Führungsschiene 77 und dem Führungswagen 79 eingesetzt werden kann.

Wie insbesondere Figur 5 und Figur 6 entnehmbar ist, weisen die zwei Axialführung 69 jeweils eine Führungsschiene 77 und jeweils zwei Führungswagen 79 auf, die in Axialrichtung 39 translatorisch zueinander verstellbar sind. Die Führungsschiene 77 und die Führungswagen 79 der Axialführungen 69 können wie die Führungsschiene 77 und der Führungswagen 79 der in Figur 3 dargestellten Radialführung 71 ausgebildet sein. Wie insbesondere Figur 6 entnehmbar ist, sind die Führungswagen 79 der Axialführungen 69 derart fest mit dem Rollenwagen 53 verbunden, dass die Führungswagen 79 einer translatorischen Stellbewegung des Rollenwagens 53 in Axialrichtung 39 direkt folgen. Wie insbesondere Figur 5 entnehmbar ist, sind die Führungsschienen 77 der Axialführungen 69 fest mit dem Fundament 55 der Formgebungsvorrichtung 1 befestigt. Die zwei Axialführungen 69 erstrecken sich parallel zueinander in Axialrichtung 39 und sind quer zur Axialrichtung 39 voneinander beabstandet. Zwischen den Axialführung 69 ist der Axial-Linearmotor 43 angeordnet, dessen Translator 47 sich parallel zu den Axialführung 69 in Axialrichtung 39 erstreckt. Der Translator 47 des Axial-Linearmotors 43 sowie die Führungswagen 79 der Axialführungen 69 sind fest mit dem Rollenwagen 53 verbunden, sodass der Rollenwagen 53 in Axialrichtung 39 geführt ist und der translatorischen Stellbewegung des Translator 47 des Axial-Linearmotors 43 direkt folgt. Über die zuvor beschriebene bewegungsfeste Verbindung der Formrollen 25 mit dem Rollenwagen 53 folgen die Formrollen dabei der translatorischen Bewegung des Rollenwagens 53 direkt und dadurch direkt der translatorischen Stellbewegung des Translators 47 des Axial-Linearmotors 43.

Die Formgebungsvorrichtung 1 weist vier Messsysteme 89 mit jeweils einer optischen Messeinheit 91 und einem Messstreifen 93 zum Messen der translatorischen Stellbewegung der Translatoren 45, 47 auf.

Von zwei der vier Messsysteme 89 ist jeweils ein Messsystem 89 in die zuvor beschriebene Radialführung 71 integriert. Das Messsystem 89 ist insbesondere in der Explosionsansicht in Figur 3 ersichtlich. Bei diesen Messsystemen 89 ist jeweils der Messstreifen 93 derart fest mit dem Translator 45 verbunden, dass der Messstreifen 93 der translatorischen Stellbewegung das Translators 45 des jeweiligen Radial-Linearmotors 41 direkt folgt. Dabei ist der Messstreifen 93 an der jeweiligen Führungsschiene 77 der Radialführung 71 ausgebildet. Der Messstreifen 93 ist an einer der Messeinheit 91 zugewandten Seite der Führungsschiene 77 ausgebildet. Die Messeinheit 91 ist über einen Messsystemwagen 95 mit dem Rollenwagen 53 in Radialrichtung 37 und in Axialrichtung 39 fest verbunden. Die Messeinheit 91 weist eine Richtschiene 97 auf, die sich durch einen Führungsspalt zwischen dem Führungswagen 79 und der Führungsschiene 77 der Radialführung 71 erstreckt. Dadurch kann insbesondere sichergestellt werden, dass die Relativbewegung zwischen dem Führungswagen 79 und der Führungsschiene 77 der Relativbewegung zwischen Messeinheit 91 und Messstreifen 93 entspricht. Dadurch kann eine besonders präzise Messung der Relativbewegung zwischen dem Führungswagen 79 und der Führungsschiene 77 gewährleistet werden. Insbesondere durch die bewegungsfeste Verbindung in Radialrichtung 37 der Führungsschiene 81 mit dem Translator 45 und der Formrolle 25 über den Rollenarm 59 kann dadurch sichergestellt werden, dass, abgesehen von thermisch und dynamisch bedingten Deformationen, die Bewegung des Translators 45 und der Formrolle 25 der durch das Messsystem gemessenen Relativbewegung zwischen Messeinheit 91 und Messstreifen 93 entspricht. Dadurch kann eine besonders präzise Zustellung der Formrollen 25 über den Linearmotor 41 gewährleistet werden.

Die verbleibenden zwei der vier Messsysteme 89 sind jeweils in die zuvor beschriebenen Axialführung 69 integriert. Wie insbesondere in Figur 6 ersichtlich ist, ist dabei die Messeinheit 91 über einen Messsystemwagen 95 derart fest an dem Rollenwagen 53 befestigt, dass die Messeinheit 91 der translatorischen Stellbewegung des Translator 47 des Axial-Linearmotors 43 direkt folgt. Die Messstreifen 93 sind fest mit den fest mit dem Fundament 55 verbundenen Führungsschienen 77 der Axialführungen 69 verbunden. Abgesehen davon, dass bei den Messsystemen 89 für die Axialführung 69 nicht der Messstreifen 93 sondern die Messeinheit 91 der translatorischen Stellbewegung des Translator 47 direkt folgen, sind die Messsysteme 89 der Axialführung 69 insbesondere wie die zuvor beschriebenen Messsysteme 89 der Radialführung 71 ausgebildet.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHENLISTE

- 1: Formgebungsvorrichtung (1^{I}, 1^{II}, 1^{III}, 1^{IV}, 1^{V})
- 2: Brenner
- 3: Anlage
- 5: Aufnahme
- 7: Kühlvorrichtung
- 9: Glasintermediat
- 11: Karussell
- 13: Karussellachse
- 15: Fertigungsumfangsrichtung
- 17: erste Prüfstation
- 19: zweite Prüfstation
- 21: dritte Prüfstation
- 23: Übergabevorrichtung
- 25: Formrolle
- 27: Rollenmotor; Radiallager
- 29: Rollendrehachse
- 31: Aufnahmedrehachse
- 33: Steuerung
- 35: Umfangsrichtung
- 37: Radialrichtung
- 39: Axialrichtung
- 41: Radial-Linearmotor
- 43: Axial-Linearmotor
- 45: Translator des Radial-Linearmotors; Sekundärteil
- 47: Translator des Axial-Linearmotors; Primärteil
- 49: Stator des Radial-Linearmotors; Primärteil
- 51: Stator des Axial-Linearmotors; Sekundärteil
- 53: Rollenwagen
- 55: Fundament
- 57: Verschraubung
- 59: Rollenarm
- 61: Kugellager
- 63: Motorabtriebswelle
- 65: Axialarmabschnitt
- 67: Radialarmabschnitt
- 69: Axialführung; Linearführung
- 71: Radialführung; Linearführung
- 73: Axial-Zustellachse
- 75: Radial-Zustellachse
- 77: Führungsschiene
- 79: Führungswagen
- 81: Nuten in der Führungsschiene
- 83: Vorsprünge in dem Führungswagen
- 85: Führungskolben
- 87: Führungszylinder
- 89: Messsystem
- 91: Messeinheit
- 93: Messstreifen
- 95: Messsystemwagen
- 97: Richtschiene

## Patentansprüche

1. Vorrichtung (1) zum Umformen eines drehenden Glasintermediates, insbesondere Glasrohrs, umfassend
wenigstens eine Formrolle (25), die zum Formgeben in einen Formabrollkontakt mit dem Glasintermediat (9) translatorisch verstellbar ist,
**gekennzeichnet durch**
wenigstens einen Linearmotor (41, 43) zum translatorischen Stellen der wenigstens einen Formrolle (25) derart, dass die Formrolle (25) einer translatorischen Stellbewegung des Translators (45, 47) des Linearmotors direkt folgt.

2. Vorrichtung (1) nach Anspruch 1, umfassend wenigstens einen Rollen-Motor (27) zum Drehen der wenigstens einen Formrolle (25) im Formabrollkontakt, wobei der Rollenmotor (27) derart fest mit dem Translator (45, 47) verbunden ist, dass der Rollenmotor (27) der translatorischen Stellbewegung des Translators (45, 47) direkt folgt.

3. Vorrichtung (1) nach Anspruch 1 oder 2, umfassend wenigstens ein Radiallager (25), insbesondere ein Radiallager eines Rollen-Motors (25), wobei das Radiallager (25) derart fest mit dem Translator (45, 47) verbunden ist, dass das Radiallager (25) der translatorischen Stellbewegung des Translators (45, 47) direkt folgt.

4. Vorrichtung (1) nach einem der vorstehenden Ansprüche, umfassend wenigstens eine Linearführung (69, 71) zum Führen des Translators (45, 47) und der wenigstens einen Formrolle (25) entlang einer Zustellachse (73, 75), wobei die Linearführung (69, 71) eine Führungsschiene (77) und eine Führungswagen (79) umfasst, die entlang der Zustellachse (73, 75) zueinander beweglich sind, wobei der Translators (45, 47) derart fest mit der Führungsschiene (77) oder dem Führungswagen (79) verbunden ist, dass die Führungsschiene (79) oder der Führungswagen (79) der translatorischen Stellbewegung des Translators (45, 47) direkt folgt.

5. Vorrichtung (1) nach Anspruch 4, wobei der fest mit dem Translator (45, 47) verbundene Teil der wenigstens einen Linearführung (69, 71), insbesondere der Führungswagen (79) oder die Führungsschiene (77), derart fest mit einem entlang der Zustellachse (73, 75) verstellbaren Rollenträger (53, 59), insbesondere einem längs zur Rollen-Drehachse verstellbaren Rollenwagen (53) und/oder einem quer zur Rollen-Drehachse verstellbaren Rollenarm (59) verbunden ist, dass der Rollenträger (53, 59) der translatorischen Stellbewegung des Translators (45, 47) direkt folgt.

6. Vorrichtung (1) nach einem der vorstehenden Ansprüche, umfassend wenigstens ein Messsystem (89) mit einer insbesondere optischen Messeinheit (91) und einem Messstreifen (93) zum Messen der translatorischen Stellbewegung des Translators (45, 47), wobei die Messeinheit (91) oder der Messtreifen (93) derart fest mit dem Translator (45, 47) verbunden ist, dass die Messeinheit (91) oder der Messstreifen (93) der translatorische Stellbewegung des Translators (45, 47) direkt folgt.

7. Vorrichtung (1) nach Anspruch 6, wobei der Messstreifen (93) an einer Führungsschiene (77) einer Linearführung (69, 71) insbesondere nach einem der Ansprüche 4 oder 5 zum Führen des Translators (45, 47) ausgebildet ist.

8. Vorrichtung (1) nach Anspruch 6 oder 7, wobei die Messeinheit (91) mit einer Richtschiene (97) verbunden ist, die sich durch einen Führungsspalt zwischen einem Führungswagen (79) und einer Führungsschiene (77) einer Linearführung (69, 71) insbesondere nach einem der Ansprüche 4 oder 5 zum Führen des Translators und der wenigstens einen Formrolle (25) erstreckt.

9. Vorrichtung (1) nach einem der vorstehenden Ansprüche, wobei der Translator (45, 47) eines des wenigstens einen Linearmotors (41, 43) quer, insbesondere orthogonal, zu einer Rollen-Drehachse (29), um welche die wenigstens eine Formrolle (25) drehbar ist, translatorisch verstellbar ist, um insbesondere die wenigstens eine Formrolle (25) zum Formgeben in den Formabrollkontakt zu versetzen und nach erfolgter Formgeben von diesem zu lösen.

10. Vorrichtung (1) nach einem der Ansprüche 1 bis 9, wobei der Translator (45, 47) eines des wenigstens einen Linearmotors (41, 43) längs, insbesondere parallel, zu einer Rollen-Drehachse (29), um welche die wenigstens eine Formrolle (25) drehbar ist, translatorisch verstellbar ist, insbesondere zur Glasmassenkompensation translatorisch verstellbar ist.

11. Vorrichtung (1) nach einem der vorstehenden Ansprüche, wobei die wenigstens eine Formrolle (25) zwei Formrollen (25) umfasst und der wenigstens eine Linearmotor (41, 43) zwei Linearmotoren (41) mit jeweils einem Translator (45) umfasst, wobei jeweils einer der zwei Translatoren (45) mit jeweils einer der zwei Formrollen (25) derart fest verbunden ist, dass die jeweilige Formrolle (25) einer translatorischen Stellbewegung des jeweiligen Translators (45) direkt folgt.

12. Vorrichtung (1) nach Anspruch 11, wobei die zwei Translatoren (45) derart unabhängig voneinander mit jeweils einer Formrolle (25) verbunden sind, dass die zwei Formrollen (25) unabhängig voneinander translatorisch verstellbar sind.

13. Vorrichtung (1) nach einem der vorstehenden Ansprüche, wobei der wenigstens eine Linearmotor (41, 43) wenigstens einen Linearmotor (41) mit einem quer, insbesondere orthogonal, zur Rollen-Drehachse (29) translatorisch verstellbaren Translator (45) und einen Linearmotor (43) mit einem längs, insbesondere parallel, zur Rollen-Drehachse (29) verstellbaren Translator (47) umfasst.

14. Anlage (3) zum Herstellen eines insbesondere rotationssymmetrischen Glaszeuges, wie einer Glasspritze, einer Glaskarpule, eines Glasvials oder einer Glasampulle, umfassend:
eine Aufnahme (5) zum drehbaren Halten eines Glasintermediates (9), insbesondere eines Glasrohrs, und
eine Vorrichtung (1) nach einem der vorstehenden Ansprüche zum Umformen des Glasintermediates (9), und insbesondere
ein Karussell (11) zum Verfahren der Aufnahme (5) zu unterschiedlichen Fertigungsstationen (1, 1^{I}, 1^{II}, 1^{III}, 1^{IV}, 1^{V}, 2, 17, 19, 21, 23) oder zum Verfahren der wenigstens einen Formrolle (25) zu unterschiedlichen Aufnahmen (5) für Glasintermediate (9).

15. Glaszeug, wie eine Glasspritze, eine Glaskarpule, ein Glasvials oder eine Glasampulle, **dadurch gekennzeichnet, dass** das Glaszeug mit einer Vorrichtung (1) gemäß einem der Ansprüche 1 bis 13 oder einer Anlage (3) gemäß Anspruch 14 hergestellt ist, insbesondere wobei das Glaszeug aus Borosilikatglas hergestellt ist.
